# FASCICULE DE BREVET EUROPEEN

(11) **EP 4 592 575 B1**
(45) Date de publication et mention de la délivrance du brevet: **11.11.2026**
(21) Numéro de dépôt: 25153526.6
(22) Date de dépôt: 23.01.2025
(51) Int. Cl.: F16L 37/22, F16L 37/113

(54) **ELÉMENT DE RACCORD FLUIDIQUE ET RACCORD FLUIDIQUE COMPRENANT UN TEL ÉLÉMENT DE RACCORD FLUIDIQUE**
FLUIDANSCHLUSSELEMENT UND FLUIDKUPPLUNG MIT EINEM SOLCHEN FLUIDANSCHLUSSELEMENT
FLUID CONNECTION ELEMENT AND FLUID CONNECTION COMPRISING SUCH A FLUID CONNECTION ELEMENT

(30) Priorité: 24.01.2024 FR 2400678
(43) Date de publication de la demande: 30.07.2025
(73) Titulaire: Staubli Faverges, 74210 Faverges-Seythenex (FR)
(72) Inventeur: MARQUES BARROCA, Serafim, 73200 ALBERTVILLE (FR); DURIEUX, Christophe, 73200 GILLY SUR ISERE (FR)
(74) Mandataire: Lavoix

(56) Documents cités:
- FR-A2- 2 484 053
- US-A1- 2014 117 664
- US-A1- 2017 336 005

## Description

La présente invention concerne un élément de raccord fluidique et un raccord fluidique comprenant un tel élément de raccord fluidique.

Dans le domaine des circuits d'air, en particulier ceux conçus pour connecter un pantographe à une caténaire, utilisant de l'air à une pression d'environ 1,5 bar, il est connu de raccorder, à l'aide d'un raccord fluidique, les différents éléments d'un circuit d'air, de manière à établir entre eux une connexion fluidique pour faire circuler l'air dans le circuit d'air.

Un raccord fluidique connu comprend au moins un premier élément de raccord fluidique, par exemple un élément femelle, et au moins un deuxième élément de raccord fluidique complémentaire, par exemple un élément mâle, agencé pour être accouplé avec le premier élément de raccord fluidique.

Cependant, à cause des vibrations auxquelles peut être soumis le raccord fluidique en configuration accouplée, le premier élément de raccord fluidique et le deuxième élément complémentaire risquent de se déconnecter intempestivement.

Il est connu de EP3790758 d'utiliser des moyens de verrouillage qui sont engagés par projection dans des rainures du corps du premier élément de raccord fluidique. Cependant, EP3790758 n'apporte pas d'autre détail technique sur la réalisation du verrouillage.

Il est également connu de GB1002565 d'utiliser, pour verrouiller le deuxième élément de raccord fluidique dans le premier élément de raccord fluidique, des segments mobiles qui sont mobiles radialement dans des logements de verrouillage du deuxième élément de raccord fluidique et qui sont recouverts, en configuration accouplée du raccord fluidique, par une surface de recouvrement d'une bague de verrouillage. Cependant, les segments de verrouillage s'opposent au retrait du deuxième élément de raccord fluidique hors du premier élément de raccord fluidique mais ne permettent pas de verrouiller le deuxième élément de raccord fluidique sans jeu longitudinal.

Il est également connu de US2017/336005 de ménager un manchon externe autour d'une bague de verrouillage, la bague de verrouillage en position avancée de verrouillage étant en butée avant contre le manchon externe, lui-même en butée avant contre le corps, de manière que le manchon externe et la bague de déverrouillage soient entraînés conjointement vers l'arrière pour la libération des billes de verrouillage dans une procédure de désaccouplement d'urgence. Cette construction n'est pas ergonomique, notamment pour l'action de verrouillage. Elle ne permet pas non plus de protéger les surfaces internes de la bague de verrouillage des poussières.

Le but de l'invention est alors de proposer un élément de raccord fluidique, qui ne nécessite qu'une seule action de verrouillage, qui soit ergonomique, fiable dans des conditions de fonctionnement exigeantes et compact.

A cet effet, l'invention a pour objet un élément de raccord fluidique qui comprend :
- un corps, centré sur un axe longitudinal, le corps comprenant :
   ▪ un volume interne de réception d'un élément de raccord fluidique complémentaire, le volume interne de réception débouchant du corps par une embouchure, selon une direction avant, et
   ▪ plusieurs logements, chaque logement traversant le corps et débouchant radialement vers l'intérieur dans le volume interne de réception;
- dans chaque logement, un élément de verrouillage, qui est mobile dans le logement entre :
   ∘une position interne de verrouillage, dans laquelle l'élément de verrouillage fait saillie dans le volume interne de réception et est apte à s'engager dans une gorge externe de verrouillage de l'élément de raccord fluidique complémentaire emmanché dans le volume interne de réception pour s'opposer au retrait de l'élément de raccord fluidique complémentaire hors de l'élément de raccord fluidique, et
   ∘ une position externe de déverrouillage, dans laquelle l'élément de verrouillage ne s'oppose pas au retrait de l'élément de raccord fluidique complémentaire (3) hors de l'élément de raccord fluidique ; et
- une bague de verrouillage, montée coulissante autour du corps, comprenant une surface interne de verrouillage comportant :
   ∘ au moins une surface évasée divergeant selon la direction avant, et
   ∘ une surface de recouvrement cylindrique qui est disposée en continuité de la surface évasée selon une direction arrière opposée à la direction avant,

   la bague de verrouillage étant mobile longitudinalement par rapport au corps de l'élément de raccord fluidique entre :
      ∘ une position avancée de verrouillage, dans laquelle la bague de verrouillage est en butée avant contre le corps et la surface de recouvrement entoure radialement les éléments de verrouillage et les maintient en position interne de verrouillage, et
      ∘ une position reculée de déverrouillage, dans laquelle la bague de verrouillage ne s'oppose pas au déplacement des éléments de verrouillage dans leur logement respectif jusqu'à leur position externe de déverrouillage,
   alors que, la surface évasée est apte à coopérer radialement avec les éléments de verrouillage, entre la position avancée de verrouillage et la position reculée de déverrouillage de la bague de verrouillage.

Selon l'invention, l'élément de raccord fluidique comprend, en outre, :
- un piston disposé autour du corps et autour de la bague de verrouillage et mobile longitudinalement par rapport au corps et par rapport à la bague de verrouillage,
- un premier ressort repoussant le piston selon la direction avant de l'élément de raccord fluidique vers une position où le piston est en butée dans la direction avant contre le corps.

Au sens de la présente invention, le fait que la surface évasée est apte à coopérer radialement avec les éléments de verrouillage, entre la position avancée de verrouillage et la position reculée de déverrouillage de la bague de verrouillage, signifie que la coopération entre la surface évasée et les éléments de verrouillage peut avoir lieu sur tout ou partie de la course de la bague de verrouillage entre les deux positions précitées. En particulier, la surface évasée peut ne pas coopérer avec les éléments de verrouillage sur une partie de cette course, au voisinage et/ou au niveau de la position de verrouillage.

Grâce à l'invention, en particulier grâce au piston et à la bague de verrouillage, l'accouplement entre l'élément de raccord fluidique et l'élément de raccord fluidique complémentaire est facilité car il nécessite seulement la manipulation de la bague de verrouillage par rapport au corps entre une position avancée et une position reculée et que le piston disposé autour de la bague de verrouillage protège la bague de verrouillage et limite les entrées de poussières au niveau de la surface évasée, de la surface de recouvrement cylindrique et des logements. De plus, en configuration accouplée de l'élément de raccord fluidique et de l'élément de raccord fluidique complémentaire, la surface de recouvrement cylindrique maintient les éléments de verrouillage en position interne de manière que les éléments de verrouillage n'exercent pas d'effort longitudinal sur la bague de verrouillage.

Suivant d'autres aspects avantageux de l'invention, l'élément de raccord fluidique comprend une ou plusieurs des caractéristiques suivantes, prises isolément ou suivant toutes les combinaisons techniquement possibles :
- les éléments de verrouillage ont des segments allongés comprenant une extrémité interne en portion de sphère et une extrémité externe en portion de sphère disposées de part et d'autre d'une portion médiane cylindrique qui est complémentaire du logement associé et chaque logement s'étend selon une direction respective radiale à l'axe longitudinal.
- pour chaque élément de verrouillage, une tige transversale solidaire de l'élément de verrouillage fait saillie d'une surface externe de l'élément de verrouillage, pour chaque logement au moins une rainure latérale débouche transversalement dans le logement et radialement sur une surface radiale externe du corps, la tige transversale est engagée dans la rainure latérale, de manière que lorsque l'élément de verrouillage est déplacé de sa position interne de verrouillage à sa position externe de déverrouillage, ou réciproquement, la tige transversale est déplacée dans la rainure latérale et qu'un fond de la rainure latérale forme une butée à la tige transversale qui limite le mouvement de l'élément de verrouillage dans le logement vers le volume interne de réception et un axe longitudinal de la tige transversale est incliné, par rapport un plan radial perpendiculaire à l'axe longitudinal et par rapport à un plan longitudinal passant par l'axe longitudinal.
- au moins un deuxième ressort exerce, sur la bague de verrouillage, un effort qui s'oppose au mouvement de la bague de verrouillage vers sa position reculée de déverrouillage au moins lorsque la bague de verrouillage est en position avancée de verrouillage.
- le deuxième ressort est interposé entre la bague de verrouillage et le corps de l'élément de raccord fluidique et repousse la bague de verrouillage vers sa position avancée de verrouillage, la bague de verrouillage étant, en configuration désaccouplée de l'élément de raccord fluidique, en position avancée de verrouillage ;
- une liaison baïonnette par coopération d'au moins un pion avec un rainure hélicoïdale est formée entre le corps de l'élément de raccord fluidique et la bague de verrouillage, la rainure présentant une encoche formant une première extrémité de la rainure, lorsque la bague de verrouillage est en position avancée de verrouillage, le pion coopère avec l'encoche de la rainure et chaque deuxième ressort s'oppose au mouvement du pion hors de l'encoche, et la bague de verrouillage est en position reculée de déverrouillage lorsque le pion coopère avec une deuxième extrémité de la rainure, opposée à la première extrémité ;
- le piston comprend une base avant qui coopère à jeu radial réduit avec une surface radiale externe du corps, et une jupe arrière montée autour de la bague de verrouillage, la bague de verrouillage étant recouverte radialement à jeu radial réduit par la jupe arrière du piston dans toutes les positions de la bague de verrouillage par rapport au corps de la position reculée de déverrouillage à la position avancée de verrouillage;
- le piston dépasse du corps selon la direction avant au moins dans une configuration désaccouplée de l'élément de raccord fluidique ;
- la bague de verrouillage comprend un chanfrein interne qui diverge selon la direction avant, en position reculée de déverrouillage de la bague de verrouillage, la bague de verrouillage est en butée arrière contre le corps et le chanfrein interne est en regard longitudinal des éléments de verrouillage et en position reculée de déverrouillage de la bague de verrouillage, le piston forme une butée radiale externe aux éléments de verrouillage ;
- le corps de l'élément de raccord fluidique comprend une gorge périphérique externe présentant une surface distale, la gorge périphérique externe étant radialement découverte par la bague de verrouillage en position avancée de verrouillage et radialement recouverte par la bague de verrouillage en position reculée de déverrouillage, et lorsque la surface distale de la gorge périphérique externe du corps est sur le même plan radial qu'une surface d'extrémité arrière de la bague de verrouillage, la surface de recouvrement de la bague de verrouillage maintient les éléments de verrouillage en position interne de verrouillage ;
- la bague de verrouillage présente une gorge de manutention, le corps de l'élément de raccord fluidique présente une gorge de manutention, la gorge de manutention de la bague de verrouillage et la gorge de manutention du corps étant configurées pour recevoir un outil afin de déplacer longitudinalement la bague de verrouillage par rapport au corps, et la gorge de manutention ménagée sur le corps est découverte par la bague de verrouillage au moins lorsque celle-ci est longitudinalement entre une position intermédiaire, disposée entre la position avancée de verrouillage et la position reculée de déverrouillage, et la position avancée de verrouillage.

L'invention a également pour objet un raccord fluidique comprenant un élément de raccord fluidique tel que défini ci-avant et un élément de raccord fluidique complémentaire, comprenant un corps complémentaire formant la gorge externe de verrouillage.

Suivant d'autres aspects avantageux de l'invention, le raccord fluidique comprend une ou plusieurs des caractéristiques suivantes, prises isolément ou suivant toutes les combinaisons techniquement possibles :
- un support est fixé longitudinalement au corps complémentaire et comprend une face avant qui est disposée autour de l'élément de raccord fluidique complémentaire, le raccord fluidique étant configuré pour que, dans une configuration accouplée du raccord fluidique,
   ∘ les éléments de verrouillage soient engagés dans la gorge externe de verrouillage au contact d'une surface distale inclinée de cette gorge,
   ∘ une face avant du piston soit en butée longitudinale contre la face avant du support et
   ∘ le piston soit décalé selon la direction arrière par rapport à sa position en butée avant contre le corps.
- un rapport entre :
   ∘ d'une part, un angle défini entre la surface distale inclinée de la gorge externe de verrouillage et un axe longitudinal de l'élément complémentaire de raccord,
   ∘ d'autre part, un angle défini entre la surface évasée et l'axe longitudinal de l'élément de raccord fluidique,
est compris entre 7 et 12 et, de préférence, supérieur à 10.
- le corps complémentaire comprend une surface radiale externe étagée, et le corps de l'élément de raccord fluidique présente une surface radiale interne étagée, délimitant le volume interne de réception, la surface radiale externe étagée et la surface radiale interne étagée étant configurées pour coopérer par complémentarité de formes en cours d'accouplement du raccord fluidique.

L'invention apparaîtra plus clairement à la lecture de la description qui va suivre, donnée uniquement à titre d'exemple non limitatif et faite en référence aux dessins annexés dans lesquels :
[Fig 1] La figure 1 est une coupe longitudinale d'un raccord fluidique selon un premier mode de réalisation, l'invention comprenant un élément de raccord fluidique selon l'invention et un élément de raccord fluidique complémentaire, les éléments de raccord étant représentés dans une configuration désaccouplée.
[Fig 2] La figure 2 est une coupe transversale à plus grande échelle du raccord fluidique de la figure 1 selon le plan de coupe II-II montré sur la figure 1
[Fig 3] La figure 3 est une coupe longitudinale partielle du raccord fluidique des figures 1 et 2, selon le plan de coupe III-III montré sur la figure 4.
[Fig 4] La figure 4 est une vue longitudinale à plus grande échelle de l'encadré IV de la figure 1 sans son piston ni sa bague de verrouillage.
[Fig 5] La figure 5 est une demi-coupe longitudinale de l'élément de raccord fluidique des figures 1 à 4, l'élément de raccord étant représenté dans la configuration désaccouplée.
[Fig 6] La figure 6 est une coupe longitudinale du raccord fluidique des figures 1 à 5, les éléments de raccord étant représentés dans une configuration intermédiaire, en cours d'accouplement.
[Fig 7] La figure 7 est une coupe transversale à plus grande échelle du raccord fluidique des figures 1 à 6, dans la configuration de la figure 6, selon le plan de coupe VII-VII montré sur la figure 6.
[Fig 8] La figure 8 est une coupe transversale à plus grande échelle du raccord fluidique des figures 1 à 7, dans la configuration de la figure 6, selon le plan de coupe VIII-VIII montré sur la figure 6.
[Fig 9] La figure 9 est une coupe longitudinale du raccord fluidique des figures 1 à 8, comparable à la figure 6, le raccord fluidique étant représenté dans une configuration accouplée.
[Fig 10] La figure 10 est une coupe transversale à plus grande échelle du raccord fluidique des figures 1 à 9 dans la configuration de la figure 9, selon le plan de coupe X-X montré sur la figure 9.
[Fig 11] La figure 11 est une coupe longitudinale d'un raccord fluidique selon un deuxième mode de réalisation de l'invention comprenant un élément de raccord fluidique et un élément de raccord fluidique complémentaire, les éléments de raccord étant représentés en configuration désaccouplée.
[Fig 12] La figure 12 est une coupe longitudinale du raccord fluidique de la figure 11, le raccord fluidique étant représenté dans une configuration accouplée.
[Fig 13] La figure 13 est une coupe transversale à plus grande échelle du raccord fluidique des figures 11 et 12 selon le plan de coupe XIII-XIII montré sur la figure 12.
[Fig 14] La figure 14 est une coupe transversale à plus grande échelle du raccord fluidique des figures 11 à 13 selon le plan de coupe XIV-XIV montré sur la figure 12.
[Fig 15] La figure 15 est une vue de côté à plus grande échelle du raccord fluidique des figures 11 à 14, en configuration accouplée.

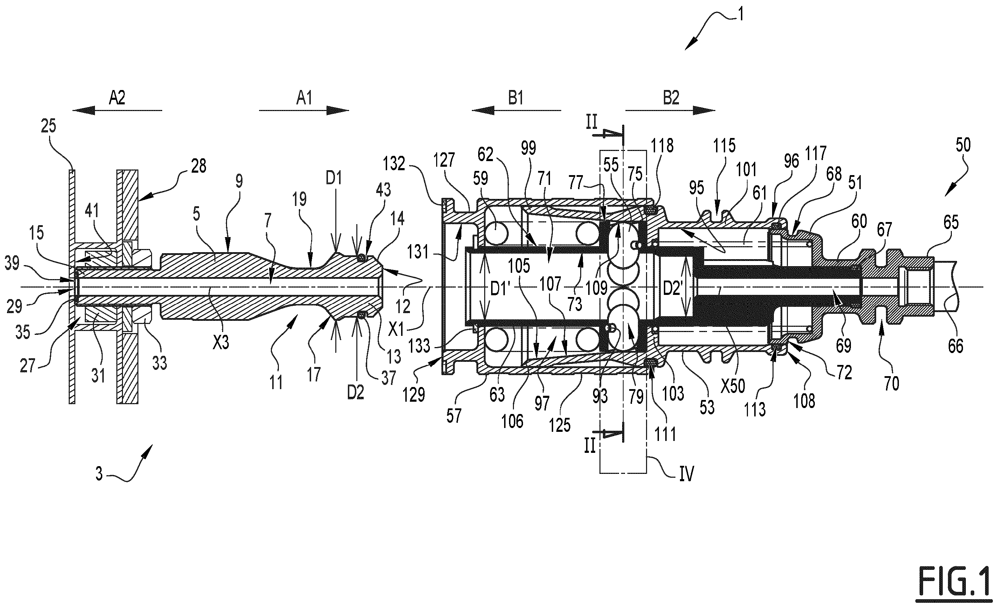

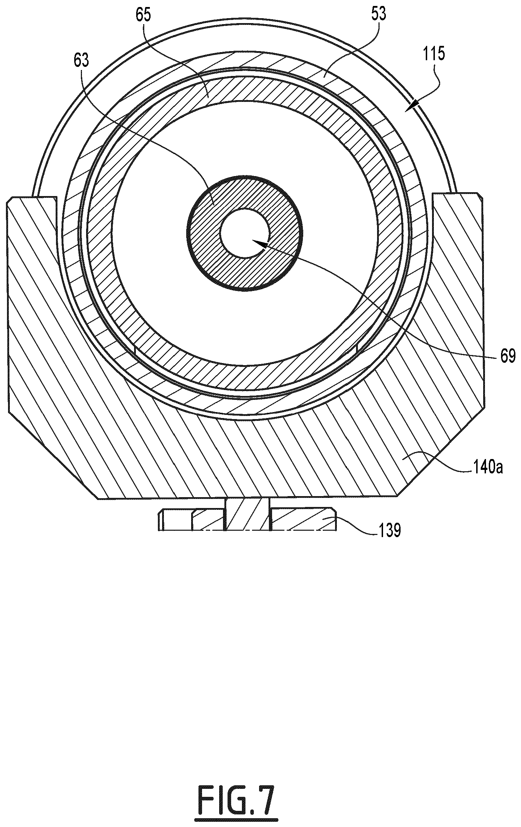

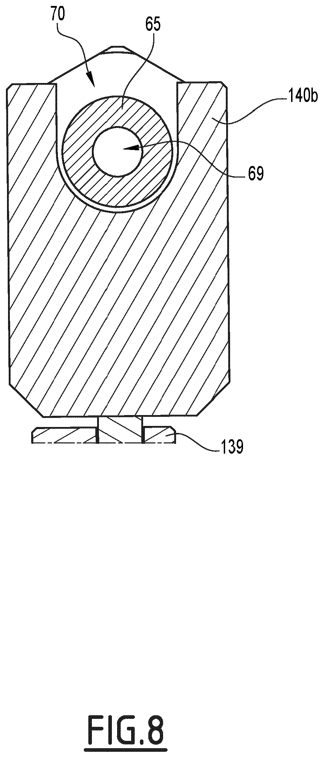

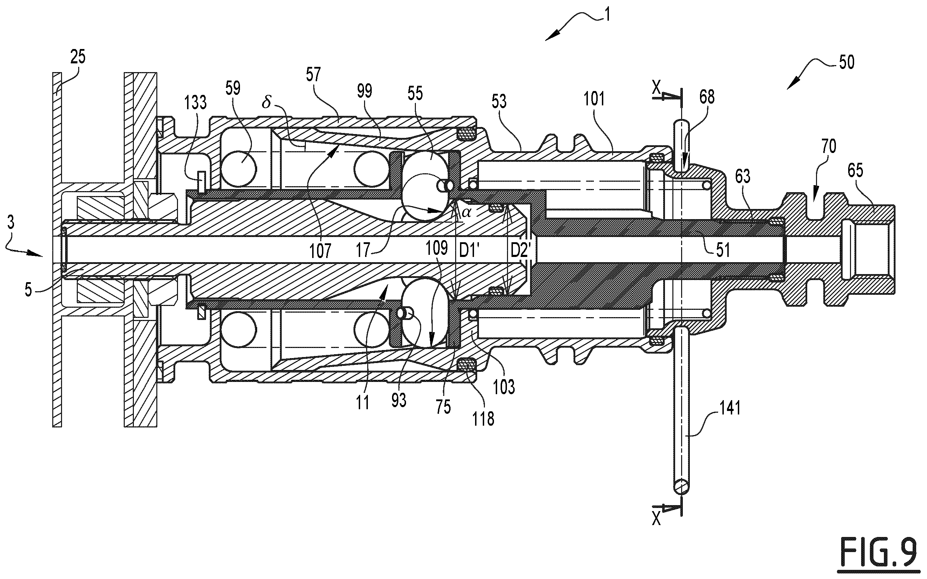

Un raccord fluidique 1, selon un premier mode de réalisation de l'invention, est représenté sur les figures 1 à 10 et comprend un élément de raccord fluidique 50 conforme à un premier mode de réalisation de l'invention, ici un élément de raccordement fluidique femelle, et un élément de raccord fluidique complémentaire 3, ici un élément de raccord mâle. Sur la figure 9, l'élément de raccord 50 reçoit en emmanchement l'élément de raccord fluidique complémentaire 3, en configuration accouplée du raccord fluidique 1, pour la jonction amovible de deux canalisations ou conduits.

De façon générale, on définit, pour chaque élément de raccord 3 et 50, un côté avant orienté vers l'autre élément en début d'emmanchement et un côté arrière orienté à l'opposé de l'autre élément en début d'emmanchement. Une direction avant d'un élément de raccord est orientée vers l'avant de cet élément, parallèlement à un axe longitudinal de cet élément de raccord. A l'inverse, une direction arrière d'un élément de raccord est orientée vers l'arrière de cet élément, parallèlement à l'axe longitudinal. Pour un élément constitutif d'un élément de raccord, l'adjectif « interne » signifie orienté radialement vers l'axe longitudinal de cet élément de raccord, l'adjectif « externe » signifie orienté radialement à l'opposé de l'axe longitudinal de cet élément de raccord.

On note X1 un axe longitudinal du raccord fluidique 1.

On note X50 un axe longitudinal de l'élément de raccord 50 et X3 un axe longitudinal de l'élément de raccord complémentaire 3. En cours d'emmanchement et en configuration accouplée des éléments de raccord 3 et 50, les axes longitudinaux X3 et X50 sont confondus et alignés sur l'axe longitudinal X1

L'élément de raccord fluidique complémentaire 3 comprend un corps complémentaire 5, ici un corps mâle. Le corps complémentaire 5 est tubulaire et traversé de part en part par un canal interne complémentaire 7 centré sur l'axe longitudinal X3. Le corps complémentaire 5 comprend une surface radiale externe 9 qui forme une gorge externe de verrouillage 11, une extrémité avant 13 disposée en avant par rapport à la gorge externe de verrouillage 11 et une extrémité arrière filetée 15 disposée en arrière par rapport à la gorge externe de verrouillage 11. L'extrémité avant 13 est délimitée longitudinalement par une face distale 12 reliée à la surface radiale externe 9 par un chanfrein 14.

La gorge externe de verrouillage 11 est délimitée, sur l'avant, par une surface distale inclinée 17 tronconique. La surface distale 17 est inclinée par rapport à l'axe longitudinal X3 d'un angle α compris entre 30° à 60°, de préférence entre 40° et 60°, ici égal à 50°, pris du côté avant de la surface distale 17, et diverge vers l'avant selon une direction avant A1 de l'élément de raccord complémentaire 3. La gorge externe de verrouillage 11 est également délimitée par un fond cylindrique 19 qui poursuit la surface distale inclinée 17 vers l'arrière, selon une direction arrière A2 de l'élément de raccord complémentaire 3.

Pour la présente description, les termes tels que « axial », « radial » et « longitudinal » sont définis par rapport à l'axe longitudinal X1, X3 ou X50 de l'élément du raccord concerné. Par exemple, concernant le corps complémentaire 5, une surface axiale du corps complémentaire 5 s'étend perpendiculairement à l'axe X3, une surface radiale du corps complémentaire 5 s'étend parallèlement à, et autour de, l'axe X3. Les termes tels que « avant » et « distal », lorsqu'ils concernent l'élément de raccord complémentaire 3, se rapportent à la direction avant A1. Les termes tels que « arrière » et « proximal », lorsqu'ils concernent l'élément de raccord complémentaire 3, se rapportent à la direction arrière A2 opposée à la direction avant A1. Une « surface avant » est tournée dans la direction avant A1, une « surface arrière » est tournée dans la direction arrière A2.

Avantageusement, la surface radiale externe 9 est étagée entre la gorge de verrouillage 11 et la face distale 12, c'est-à-dire qu'elle présente plusieurs diamètres externes, dans l'exemple un premier diamètre D1 et un deuxième diamètre D2 inférieur à D1, qui sont décroissants selon la direction avant A1.

Le raccord fluidique 1 comprend également préférentiellement un support 25 qui délimite un logement 27, une face avant 28 qui est axiale et un conduit interne 29, qui est ici le conduit interne d'un patin d'un pantographe. De manière avantageuse mais non obligatoire, le support 25 est multipartite. Le logement 27 est destiné à recevoir l'extrémité arrière 15. L'élément de raccord complémentaire 3 est conçu pour être fixé avec le support 25 de manière à être raccordé au conduit interne 29 et à ce que la face avant 28 du support 25 soit disposée autour de l'élément de raccord fluidique complémentaire 3. Le corps complémentaire 5 dépasse partiellement de la face avant du support 25 dans la direction avant A1. En particulier, l'extrémité avant 13 et la gorge externe de verrouillage 11 sont disposées à l'avant de la face avant 28 du support 25 selon la direction avant A1.

Le raccord fluidique 1 comprend également un écrou 31 et un contre-écrou 33 vissés sur le filetage de l'extrémité arrière 15 engagée dans le logement 27 de manière à solidariser le corps complémentaire 5 au support 25 selon l'axe longitudinal X3 dans une configuration fixée, où l'élément de raccord complémentaire 3 est fixé avec le support 25. En configuration fixée, le canal interne complémentaire 7 est relié fluidiquement au conduit interne 29. En configuration fixée, le support 25 est monté autour du corps complémentaire 5. La face avant 28 du support 25 est fixe, longitudinalement le long de l'axe X3, par rapport au corps complémentaire 5. Le corps complémentaire 5 et le support 25 sont considérés en configuration fixée dans la suite de la description.

Le raccord fluidique 1 comprend également un joint d'étanchéité frontal 35 et un joint d'étanchéité 37 torique. Le joint d'étanchéité frontal 35 est logé dans une face proximale 39 de l'extrémité arrière 15, de manière à assurer un contact étanche entre la face proximale 39 et une surface interne 41 du support 25. Le joint d'étanchéité 37 est logé dans une rainure radiale 43 de la surface radiale externe 9 disposée longitudinalement entre la gorge externe de verrouillage 11 et la face distale 12.

L'élément de raccord fluidique 50 comprend un corps 51, une bague de verrouillage 53, plusieurs éléments de verrouillage 55, un piston 57, un premier ressort 59 et avantageusement un deuxième ressort 61. Le corps 51 est tubulaire et centré sur l'axe longitudinal X50.

Avantageusement, les composants 53, 57, 59 et 61 sont également centrés sur l'axe longitudinal X50.

Le corps 51 est formé d'une partie avant 63, formant une surface radiale externe avant 62 et une embouchure 64, et d'une partie arrière 65, formant une surface radiale externe arrière 60, configurée pour être raccordée à une canalisation 66 rigide ou de type tuyau, par exemple à une alimentation en air comprimé. Les parties avant et arrière 63 et 65 sont vissées l'une avec l'autre. L'élément de raccord 50 comprend également un joint d'étanchéité 67 interposé entre la partie avant 63 et la partie arrière 65.

Pour la clarté du dessin, la canalisation 66 est représentée uniquement à la figure 1, en vue extérieure.

Les termes tels que « avant » et « distal », lorsqu'ils concernent l'élément de raccord 50, se rapportent à une direction avant B1 opposée à la direction avant A1. Les termes tels que « arrière » et « proximal », lorsqu'ils concernent l'élément de raccord 50, se rapportent à une direction arrière B2 opposée à la direction avant B1. Une « surface avant » est tournée dans la direction avant B1, une « surface arrière » est tournée dans la direction arrière B2.

Le corps 51 est traversé de part en part par un canal interne 69 qui débouche du corps 51 au niveau de l'embouchure 64 et qui forme, dans la partie avant 63, un volume interne de réception 71 du corps complémentaire 5 de l'élément de raccord complémentaire 3. Le volume interne de réception 71 débouche du corps 51 dans la direction avant B1 par l'embouchure 64. Le volume interne de réception 71 est délimité par une surface radiale interne 73 de la partie avant 63 qui est, avantageusement, étagée, c'est-à-dire qu'elle présente plusieurs diamètres internes, dans l'exemple un premier diamètre interne D1', un deuxième diamètre interne D2' et un troisième diamètre interne D3'. Le troisième diamètre interne D3 est strictement inférieur au deuxième diamètre interne D2', qui est strictement inférieur au premier diamètre interne D1'. Les diamètres internes D1', D2' et D3' sont décroissants selon la direction arrière B2.

Le canal interne 69 est dépourvu de soupape ou moyen d'obturation.

La partie arrière 65 présente une gorge périphérique externe 68 et une gorge de manutention 70 externe délimitée par des surfaces externes de prise en charge d'un outil 139. La gorge périphérique externe 68 est disposée à l'avant selon la direction B1 de la gorge de manutention 70. La gorge périphérique externe 68 présente une surface distale 72.

Le corps 51 comprend, sur la partie avant 63, une collerette externe 75. La collerette 75 fait saillie radialement de la surface radiale externe avant 62 et est délimitée radialement par une surface radiale externe 77. La collerette 75 délimite plusieurs logements 79 de réception d'un élément de verrouillage 55. Un élément de verrouillage 55 est reçu dans chaque logement 79. Ici, les logements 79 sont au nombre de six et sont identiques.

En variante, le nombre de logements 79, égal au nombre d'éléments de verrouillage 55, est différent de six, en restant supérieur ou égal à 2.

Les éléments de verrouillage 55 sont considérés montés dans leurs logements 79 respectifs dans la suite de la description.

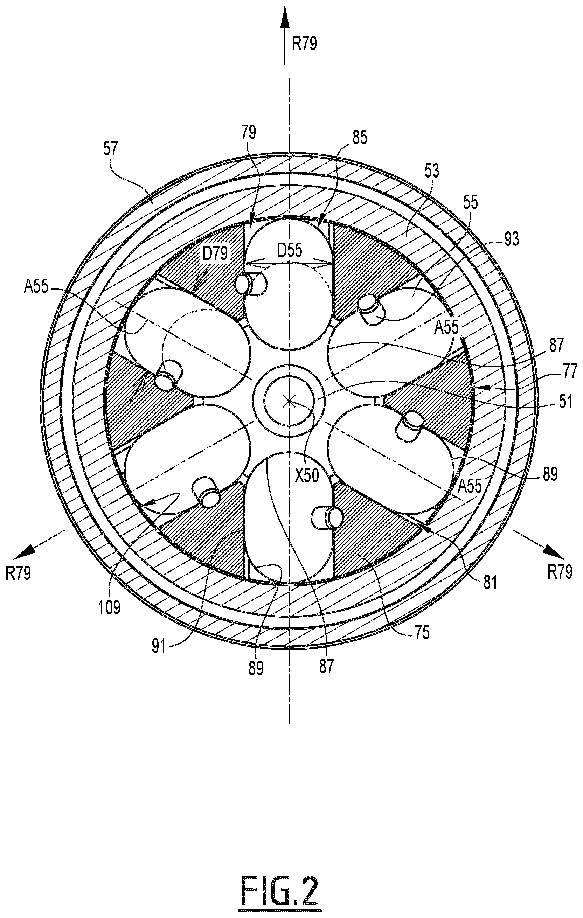

Les logements 79 sont, avantageusement, cylindriques et sont chacun centrés selon une direction R79 radiale à l'axe longitudinal X50. Les logements 79 traversent la collerette 75, c'est-à-dire qu'ils débouchent vers l'intérieur de la partie avant 63 dans le volume interne de réception 71 et vers l'extérieur de la partie avant 63 au niveau de la surface radiale externe 77 de la collerette 75. Les logements 79 sont régulièrement répartis autour de l'axe longitudinal X50 comme visible la figure 2.

Avantageusement, la collerette 75 présente, dans chaque logement 79, deux rainures latérales 81, ménagées en creux à partir de la surface radiale externe 77 de la collerette 75 et en regard l'une de l'autre et débouchant dans le logement 79 selon une direction transversale qui est parallèle à une direction perpendiculaire à la direction radiale R79 du logement 79. Pour chaque logement 79, les deux rainures latérales 81 associées sont préférentiellement diamétralement opposées l'une à l'autre, selon la direction radiale R79 du logement 79. Les rainures latérales 81 ne débouchent pas dans le volume interne de réception 71, un fond 83 de chaque rainure latérale 81 formant une butée interne aux éléments de verrouillage 55.

Les éléments de verrouillage 55, ici au nombre de six, sont des pièces de révolution allongées identiques, et comprennent une surface externe 85. On note A55 un axe central d'un élément de verrouillage 55. Lorsque les éléments de verrouillage 55 sont montés dans les logements 79, chaque axe central A55 est aligné sur une direction radiale R79. Le diamètre externe D55 de chaque élément de verrouillage 55, pris diamétralement à l'axe central A55, est sensiblement identique à un diamètre interne D79 du logements 79 associé pris diamétralement à la direction radiale R79. Les éléments de verrouillage 55 sont, avantageusement, des segments allongés comprenant une extrémité interne 87 en portion de sphère, en particulier hémisphérique, et une extrémité externe 89 en portion de sphère, en particulier hémisphérique, disposées de part et d'autre d'une portion médiane 91 cylindrique. Comme visible sur les figures, la dimension prise diamétralement à l'axe central A55 de chacune des extrémités interne 87 et externe 89 est inférieure ou égale au diamètre D55, le diamètre de chaque portion de sphère formant les extrémités interne et externe étant préférentiellement égal au diamètre D55. La géométrie des éléments de verrouillage 55 en forme de segments allongés, disposés dans les directions radiales R79 permet, en comparaison avec des billes de même encombrement radial et un volume interne de réception 71 de diamètre équivalent, de réduire l'encombrement longitudinal du corps 51 de l'élément de raccord fluidique 50 et de placer plus d'éléments de verrouillage 55 autour de l'axe longitudinal X50.

Chacun des éléments de verrouillage 55 est logé dans le logement 79 associé, la forme de la portion médiane 91, de diamètre externe D55, étant complémentaire à la forme du logement 79, de diamètre interne D79. Chacun des éléments de verrouillage 55 est mobile en translation suivant une direction radiale R79 dans son logement 79 respectif, entre une position interne de verrouillage et une position externe de déverrouillage.

Lorsqu'ils sont en position interne de verrouillage, les éléments de verrouillage 55 font saillie dans le volume interne de réception 71. Lorsqu'ils sont en position externe de déverrouillage, les éléments de verrouillage 55 ne font pas saillie dans le volume interne de réception 71.

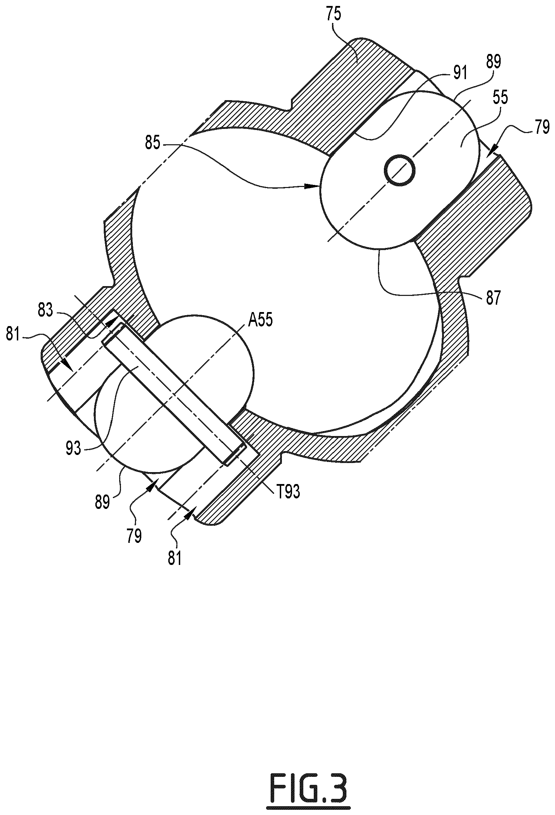

Comme visible à la figure 3, chacun des éléments de verrouillage 55 est, avantageusement, traversé par une tige transversale 93 qui fait saillie en deux points de la surface externe 85 de l'élément de verrouillage 55, ces deux points étant préférentiellement diamétralement opposés en considérant l'axe central A55. Chacune des tiges transversales 93 est montée serrée dans un logement traversant de l'élément de verrouillage 55 et donc solidaire de l'élément de verrouillage 55 associé. Chacune des tiges transversales 93 est cylindrique à section circulaire. Lorsqu'un élément de verrouillage 55 associé est reçu dans un logement 79 associé, les deux extrémités de la tige transversale 93 solidarisée à cet élément de verrouillage sont engagées dans les rainures latérales 81 du logement 79.

Lorsqu'un élément de verrouillage 55 est déplacé de sa position interne de verrouillage à sa position externe de déverrouillage, ou réciproquement, au sein du logement 79 associé, sa tige transversale 93 se déplace dans les rainures latérales 81 de ce logement. Les fonds 83 limitent le mouvement des tiges transversales 93 en direction de l'axe longitudinal X50, de manière à limiter le mouvement radial de l'élément de verrouillage 55 dans le logement 79 en direction de l'axe longitudinal X50. En d'autres termes, les fonds 83 forment une butée interne aux éléments de verrouillage 55 lorsqu'ils se déplacent vers l'axe longitudinal X50.

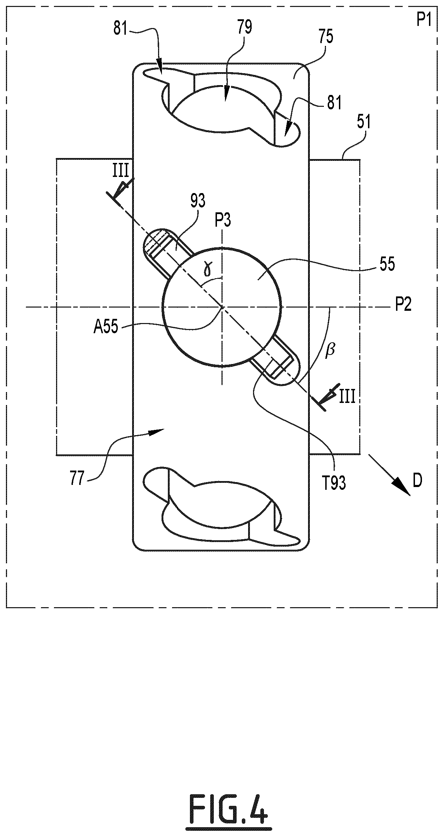

Avantageusement, chacune des tiges transversales 93 s'étend suivant un axe transversal T93 qui s'étend dans un plan P1 ortho-radial à l'axe longitudinal X50. Comme visible à la figure 4, chacun des axes transversaux T93 s'étend également selon une direction inclinée D respective par rapport à un plan longitudinal P2, passant par l'axe central A55 de l'élément de verrouillage 55 associé, et par rapport à un plan radial P3 à l'axe longitudinal X50 passant par l'axe central A55 de l'élément de verrouillage 55 associé. En configuration montée de l'élément de verrouillage 55 dans le logement 79 associé, le plan longitudinal P2 et le plan radial P3 comprennent une droite alignée sur la direction radiale R79 du logement 79. L'angle d'inclinaison β de chacune des directions inclinées D par rapport au plan longitudinal P2 associé est compris entre 30° à 60° et, de préférence, égal à 45. L'angle d'inclinaison γ de chacune des directions inclinées D par rapport au plan radial P3 associé est compris entre 30° à 60° et, de préférence, égal à 45. L'inclinaison de chacune des directions inclinées D réduit l'encombrement longitudinal de la collerette 75 et donc du corps 51 et permet de placer plus d'éléments de verrouillage 55 autour de l'axe longitudinal X50.

La bague de verrouillage 53, est une pièce de révolution creuse formant une surface radiale intérieure 95, qui délimite un volume intérieur 97 de la bague de verrouillage 53, et une surface extérieure 96. La bague de verrouillage 55 présente une jupe avant 99, une jupe arrière 101 et une collerette interne 103 faisant saillie radialement de la surface radiale intérieure 95. La jupe avant 99 et la jupe arrière 101 s'étendent longitudinalement de part et d'autre de la collerette interne 103.

La jupe avant 99 est délimitée vers l'avant par une surface distale 104 qui comprend un chanfrein interne 106 divergeant vers l'avant, d'un angle de préférence égal à 45°, par rapport à l'axe longitudinal X50.

La jupe avant 99 forme une surface interne de verrouillage 105, qui fait partie de la surface radiale intérieure 95 et qui comprend une surface évasée 107 tronconique et une surface de recouvrement 109.

La surface de recouvrement 109 est cylindrique, c'est-à-dire qu'elle présente un diamètre de recouvrement D109 constant, et est centrée sur l'axe longitudinal X50.

La surface de recouvrement 109 est disposée à l'arrière et en continuité de la surface évasée 107 selon la direction B2. La surface évasée 107 diverge vers l'avant selon la direction B1. La surface évasée 107 est, avantageusement, inclinée par rapport à l'axe longitudinal X50 d'un angle δ compris entre 2° et 12°, préférentiellement entre 2° et 7°, ici égal à 5°, pris dans le volume intérieur 97. Le diamètre de recouvrement D109 correspond, par continuité de la surface de recouvrement 109 et de la surface évasée 107, au diamètre minimal de la surface évasée 107.

La jupe avant 99 présente également, sur la surface extérieure 96 dans le prolongement radial de la collerette interne 103, une gorge périphérique avant 111.

La jupe arrière 101 est délimitée à l'arrière par une surface d'extrémité arrière 108. La jupe arrière 101 présente, sur la surface radiale intérieure 95, une gorge périphérique arrière 113. La jupe arrière 101 comprend également, sur la surface extérieure 96, une autre gorge de manutention 115, externe, délimitée par des surfaces externes de prise en charge de l'outil 139, disposée à l'arrière de la gorge périphérique avant 111 selon la direction B2.

Lorsque l'élément de raccord 50 est assemblé, un joint torique 117 est inséré dans la gorge périphérique arrière 113 et un joint d'étanchéité 118 est inséré dans la gorge périphérique avant 111. La bague de verrouillage 53 est montée autour du corps 51, le corps 51 étant logé dans le volume intérieur 97.

Le corps 51 et la bague de verrouillage 53 sont considérés assemblés l'un à l'autre dans la suite de la description.

La bague de verrouillage 53 est coulissante longitudinalement par rapport au corps 51 entre une position avancée de verrouillage et une position reculée de déverrouillage. Une surface radiale intérieure 120 de la collerette interne 103 est apte à coopérer à jeu radial réduit avec la surface radiale externe avant 62, de manière à guider le guidage du mouvement de coulissement de la bague de verrouillage 53 par rapport au corps 51 entre la position avancée de verrouillage et la position reculée de déverrouillage et pour positionner précisément la bague de verrouillage 53 autour du corps 51 en configuration accouplée.

Dans la présente description, la notion de jeu radial réduit couvre le fait que des pièces sont montées l'une autour de l'autre en pouvant coulisser mais sans possibilité de déplacement radial significatif l'une par rapport à l'autre.

En configuration désaccouplée, c'est-à-dire lorsque l'opérateur n'exerce aucune action sur la bague de verrouillage 53, la bague de verrouillage 53 est en position avancée de verrouillage.

Lorsque la bague de verrouillage 53 est en position avancée de verrouillage, et comme représenté à la figure 1 ou à la figure 9, la surface de recouvrement 109 de la surface interne de verrouillage 105 entoure radialement les éléments de verrouillage 55 et les maintient en position interne de verrouillage. Une surface avant 119 de la collerette interne 103 est alors en butée avant contre une surface axiale arrière 121 de la collerette 75. Le joint torique 117 est en contact avec la surface radiale externe arrière 60 et forme une barrière, en particulier une barrière aux poussières, sur l'arrière de la bague de verrouillage 53, entre l'extérieur du raccord fluidique 1 et le volume intérieur 97.

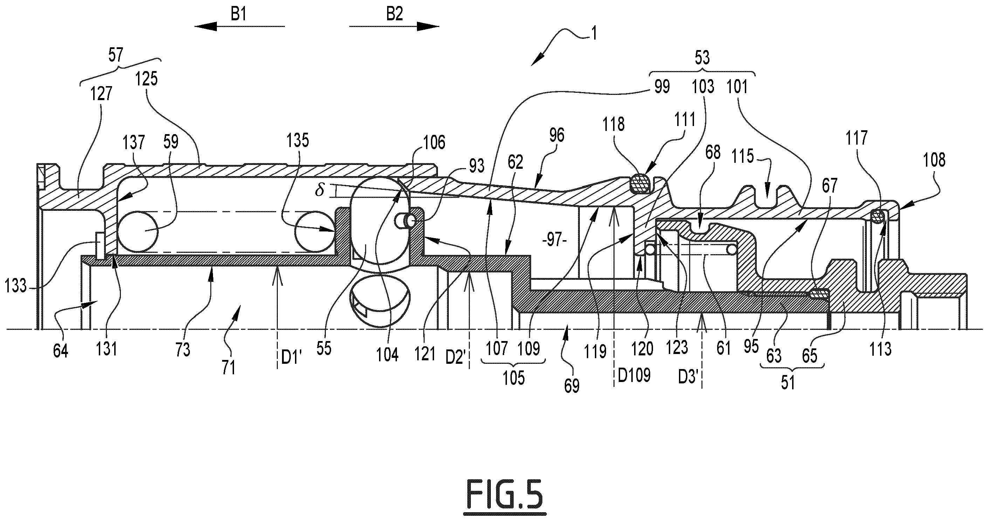

Lorsque la bague de verrouillage 53 est en position reculée de déverrouillage, et comme représenté à la figure 5, la bague de verrouillage 53 ne s'oppose pas au déplacement des éléments de verrouillage 55 au sein de leurs logements 79 respectifs jusqu'à leur position externe de déverrouillage. Une surface arrière 123 de la collerette interne 103 est alors en butée arrière contre la partie arrière 65.

Avantageusement, le deuxième ressort 61 est un ressort de compression et, lors de l'assemblage, il est inséré dans le volume intérieur 97 autour du corps 51 et en butée contre la partie arrière 65 du corps 51 et la collerette interne 103 de la bague de verrouillage 53. Le ressort 61 exerce sur la bague de verrouillage 53 un effort élastique qui repousse la bague de verrouillage 53 vers sa position avancée de verrouillage et qui s'oppose au mouvement de la bague de verrouillage 53 vers sa position reculée. En particulier, l'effort élastique du deuxième ressort 61 est dimensionné pour maintenir la bague de verrouillage 53 en position avancée de verrouillage en configuration désaccouplée lorsque l'axe longitudinal X50 est vertical et que l'embouchure 64 du corps 51 de l'élément de raccord fluidique 50 est orientée vers le haut.

Le piston 57 est une pièce de révolution creuse formée d'une jupe arrière 125 et d'une base avant 127 disposée à l'avant de la jupe arrière 125 selon la direction B1. La base avant 127 présente une face avant 129 et une surface radiale intérieure 131. La face avant 129 constitue la face terminale du piston 57 selon la direction avant B1.

Un joint d'étanchéité frontal 132, par exemple de type joint plat, est monté sur la face avant 129 du piston et configuré pour venir en contact, en cours d'accouplement des éléments de raccord 3 et 50, avec la face avant 28 du support 25 solidaire longitudinalement du corps complémentaire 5.

Comme visible sur les figures 1, 5, 6 et 9, lorsque l'élément de raccord fluidique 50 est assemblé, le piston 57 est monté autour du corps 51 et autour de la bague de verrouillage 53. En d'autres termes, le piston 57 est monté hors du volume interne de réception 71 et hors du canal interne 69. La jupe arrière 125 du piston 57 est montée autour de la jupe avant 99 de la bague de verrouillage 53 et la base avant 127 est partiellement montée autour du corps 51. La base avant 127 dépasse du corps 51 au-delà de l'embouchure 64 au moins en configuration désaccouplée.

Le piston 57 est mobile en translation longitudinale par rapport à la bague de verrouillage 53 et par rapport au corps 51. La surface radiale intérieure 131 est montée à jeu radial réduit avec la surface radiale externe avant 62 de manière à guider le mouvement de coulissement du piston 57 par rapport au corps 51 de l'élément de raccord 50. La jupe arrière 125 du piston 57 est également montée à jeu radial réduit autour de la bague de verrouillage 53 de manière à guider le mouvement de coulissement de la bague de verrouillage 53 par rapport au piston 57 entre les positions avancée et reculée.

Le corps 51 comprend un segment d'arrêt 133, qui est fixé sur la partie avant 63 du corps 51 après que le piston 57 a été monté autour du corps 51. Le segment d'arrêt 133 est solidaire longitudinalement de la partie avant 63 du corps 51. Le segment d'arrêt 133 est disposé à l'avant de la collerette 75. Le segment d'arrêt forme une surface arrière du corps 51 apte à coopérer avec une surface avant du piston 57 pour former une butée avant limitant la translation longitudinale du piston 57 par rapport au corps 51 vers l'avant selon la direction B1. Cette coopération du piston 57 avec le segment d'arrêt 133 du corps 51 permet de placer longitudinalement avec précision la face avant 129 du piston 57 par rapport aux logements 79 du corps 51. Le piston 57 est en butée avant contre le corps 51 en configuration désaccouplée.

A titre d'exemple non limitatif, le segment d'arrêt peut être un circlip monté dans une gorge périphérique externe de la partie avant 63.

Dans la suite de la description, le piston 57 est considéré monté autour du corps 51 et de la bague de verrouillage 53 et le segment d'arrêt 133 est considéré fixé au corps 51.

Le premier ressort 59 est un ressort de compression. Lors de l'assemblage de l'élément de raccord fluidique 50, le premier ressort 59 est interposé entre le piston 57 et le corps 51. Plus précisément, le premier ressort 59 est amené en butée arrière contre une surface axiale avant 135 de la collerette 75 et en butée avant contre une face arrière 137 de la base avant 127. Le premier ressort 59 développe un effort élastique de 80 à 250 daN, de préférence de l'ordre de 250 daN, sur le piston 57 et repousse le piston 57 vers l'avant du corps 51 selon la direction B1. L'effort élastique du premier ressort 59 sur le piston est au moins 50 fois supérieur, de préférence au moins 100 fois supérieur, à l'effort élastique du deuxième ressort 61 sur la bague de verrouillage 53.

Comme visible à la figure 1, en configuration de début d'accouplement entre l'élément de raccord fluidique 50 et l'élément de raccord fluidique complémentaire 3, l'élément de raccord fluidique 50 et l'élément de raccord fluidique complémentaire 3 sont alignés par l'opérateur, c'est-à-dire que les axes longitudinaux X50 et X3 de l'élément de raccord fluidique 50 et de l'élément de raccord fluidique complémentaire 3 sont alignés suivant l'axe longitudinal X1. La face avant 28 est en regard de la face avant 129 selon l'axe longitudinal X1. En particulier, l'axe longitudinal X1 est vertical et l'extrémité avant 13 de l'élément de raccord fluidique complémentaire 3 est dirigée vers le bas, tandis que l'extrémité arrière 15 est dirigée vers le haut. La bague de verrouillage 53 est en position avancée de verrouillage et les éléments de verrouillage 55 sont en position interne de verrouillage et font saillie dans le volume interne de réception 71.

La bague de verrouillage 53 est alors reculée par l'opérateur jusqu'en en position reculée de déverrouillage pour atteindre une première configuration intermédiaire d'accouplement représentée à la figure 5. Les éléments de verrouillage 55 sont libres de se déplacer dans leurs logements 79. Le chanfrein interne 106 est en regard longitudinal des éléments de verrouillage 55 mais ne coopère pas radialement avec les éléments de verrouillage 55. Le piston 57 forme la butée radiale externe aux éléments de verrouillage 55.

L'élément de raccord fluidique 50 et l'élément de raccord fluidique complémentaire 3 sont, ensuite, rapprochés l'un de l'autre par l'opérateur de manière que le corps complémentaire 5 s'engage dans le volume interne de réception 71. La bague de verrouillage 53 recouvre alors la gorge périphérique externe 68 de la partie arrière 65 du corps 51 et la gorge de manutention 70, ce qui rend visible à l'opérateur que le raccord fluidique 1 n'est pas en configuration accouplée.

Les éléments de verrouillage 55 sont alors repoussés en position externe de déverrouillage, par le corps complémentaire 5 en progression vers l'arrière de l'élément de raccord 50 selon la direction B2 dans laquelle les éléments de verrouillage 55 ne s'opposent pas au passage du corps complémentaire 5 dans le volume interne de réception 71. Le chanfrein 14 facilite le mouvement des éléments de verrouillage 55 en position externe de déverrouillage. Le corps complémentaire 5 s'engage sans coincement dans le volume interne de réception 71 grâce à la coopération, par complémentarité de formes, de la surface radiale externe 9 étagée et de la surface radiale interne 73 étagée. Le joint d'étanchéité 37 porté par le corps complémentaire 5 vient au contact de la surface radiale interne 73 du corps 51 de manière que le canal interne 69 de l'élément de raccord fluidique 50 et le canal interne complémentaire 7 de l'élément de raccord fluidique complémentaire 5 communiquent fluidiquement de manière étanche. Le fluide, par exemple de l'air, peut donc s'écouler du canal interne 69 vers le canal interne complémentaire 7 ou inversement.

Le corps complémentaire 5 est engagé dans le volume interne de réception 71 jusqu'à ce que la surface distale inclinée 17 de la gorge externe de verrouillage 11 parvienne radialement en regard des éléments de verrouillage 55. La bague de verrouillage 53, relâchée par l'opérateur et repoussée par le deuxième ressort 61, repousse les éléments de verrouillage 55 dans la gorge externe de verrouillage 11 au contact de la surface distale inclinée 17 par coopération radiale de la surface évasée 107 avec les éléments de verrouillage 55. Le chanfrein interne 106 de la jupe avant 99 de la bague de verrouillage 53 facilite le mouvement des éléments de verrouillage 55 vers leur position interne de verrouillage respective.

Simultanément, lorsque la surface distale inclinée 17 de la gorge externe de verrouillage 11 parvient en radialement regard des éléments de verrouillage 55, le joint d'étanchéité frontal 132 porté par le piston 57 vient au contact de la face avant 28 du support 25 de l'élément de raccord complémentaire 3.

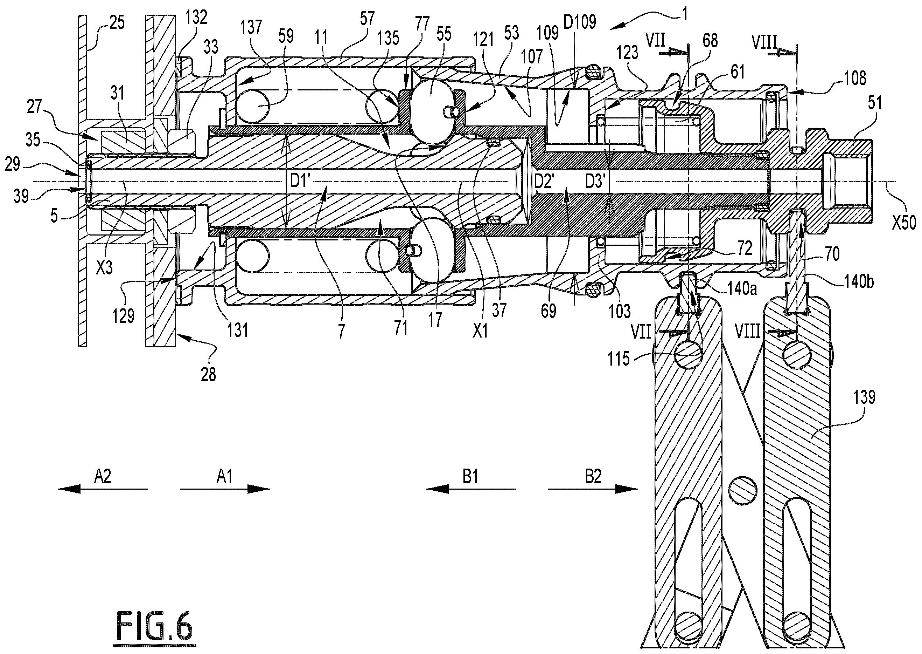

La bague de verrouillage 53, alors dans la deuxième configuration d'accouplement, visible à la figure 6, est disposée longitudinalement, le long de l'axe X1, dans une position intermédiaire entre la position avancée de verrouillage et la position reculée de déverrouillage. La gorge de manutention 70 est alors découverte par la bague de verrouillage 53.

Du fait de l'effort élastique élevé du premier ressort 59, il n'est plus possible de faire progresser davantage le corps complémentaire 5 dans le corps 51 manuellement. Du fait de l'effort élastique du deuxième ressort 61, la bague de verrouillage 53 est maintenue dans la position intermédiaire de la deuxième configuration d'accouplement, en particulier lorsque l'axe longitudinal X50 est vertical et que l'embouchure 64 du corps 51 de l'élément de raccord fluidique 50 est orientée vers le haut, et le corps complémentaire 5 et le corps 51 restent accrochés l'un à l'autre, les éléments de verrouillage 55 s'opposant au retrait du corps complémentaire 5 hors de l'élément de raccord fluidique 50 sous le seul effort de gravité de l'élément de raccord fluidique 50.

L'outil 139, visible aux figures 6, 7 et 8, est alors mis en place dans la gorge de manutention 70 de la partie arrière 65 et dans la gorge de manutention 115 de la bague de verrouillage 53. L'outil 139 est, par exemple, une pince à mors parallèles dont les mors 140a et 140b, respectivement engagés dans la gorge de manutention 70 de la partie arrière 65 et dans la gorge de manutention 115 de la bague de verrouillage 53, peuvent être rapprochés ou éloignés le long de l'axe longitudinal X. L'outil 139 est utilisé pour écarter longitudinalement la gorge de manutention 70 et la gorge de manutention 115, de manière à provoquer le déplacement de la bague de verrouillage 53 par rapport au corps 51 de l'élément de raccord fluidique 50 vers sa position avancée. La surface évasée 107 se déplace au contact radial de l'extrémité externe 89 des éléments de verrouillage 55. Le déplacement de la bague de verrouillage 53 vers l'avant impose aux éléments de verrouillage 55 un déplacement radial vers l'intérieur, au contact de la surface évasée 107, provoquant le déplacement du corps complémentaire 5, en butée avant par l'intermédiaire du support 25 contre le piston 57, vers l'arrière du corps 51, selon la direction B2, à l'encontre de l'effort élastique exercé par le premier ressort 59.

Les éléments de verrouillage 55 sont maintenus au contact de la surface évasée 107 par l'effort élastique élevé du premier ressort 59. Avantageusement, le rapport entre l'angle α et l'angle δ, ici égal à 10, est compris entre 4 et 12, préférentiellement entre 7 et 12 et est de préférence supérieur à 10, ce qui démultiplie de la course de la bague de verrouillage 53. Un déplacement de la bague de verrouillage 53 au contact des éléments de verrouillage 55 se traduit alors par un déplacement de la gorge externe de verrouillage 11 au contact des éléments de verrouillage 55 au moins 5 fois inférieur, de préférence au moins 15 fois inférieur, de préférence au moins 20 fois inférieur. Le rapport entre l'angle α et l'angle δ limite également la course du piston 57, à l'encontre du premier ressort 59, entre la configuration désaccouplée et la configuration accouplée, et limite donc les efforts d'accouplement. Le premier ressort 59 repousse donc le piston 57 dans la direction avant B1 pour mettre la face avant 129 du piston 57 en butée longitudinale contre la face avant 28 du support 25.

La surface de recouvrement 109 vient entourer radialement les éléments de verrouillage 55 et les éléments de verrouillage 55 ont atteint leur position interne de verrouillage respective. Ainsi, les éléments de verrouillage 55 coopèrent radialement avec la surface évasée 107 sur une partie de la course de la bague de verrouillage 53, entre la position reculée de déverrouillage et la position avancée de déverrouillage, puis coopèrent radialement avec la surface de recouvrement 109 sur une autre partie de la course de la bague de verrouillage 53, entre la position reculée de déverrouillage et la position avancée de déverrouillage.

Le mouvement du corps complémentaire 5 vers l'avant du corps 51 s'arrête. Les éléments de verrouillage 55 sont maintenus par la surface de recouvrement 109 en position interne de verrouillage dans laquelle ils sont engagés dans la gorge externe de verrouillage 11 et s'opposent au retrait du corps complémentaire 5 hors de l'élément de raccord fluidique 50.

La bague de verrouillage 53 est repoussée vers l'avant selon la direction B1 jusqu'à sa position avancée de verrouillage, dans laquelle la surface avant 119 de la collerette interne 103 est en butée avant contre la surface axiale arrière 121 de la collerette 75 du corps 51, la surface de recouvrement 109 recouvrant les extrémités externes 89 des éléments de verrouillage 55. Les éléments de verrouillage 55 sont en position interne mais les tiges transversales 93 ne sont pas en butée interne contre le fond 83 des rainures latérales 81 pour ne pas contrarier le verrouillage.

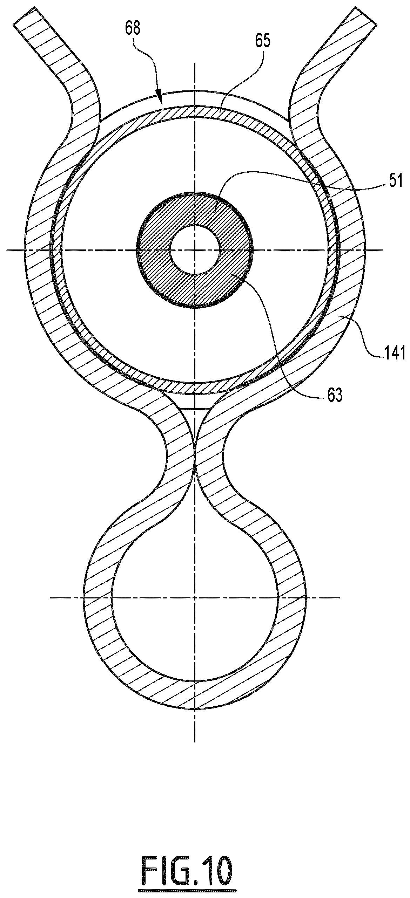

En position avancée de la bague de verrouillage 53, la configuration accouplée est atteinte, comme visible à la figure 9. La bague de verrouillage 53 découvre la gorge périphérique externe 68 et la surface distale 72 de la gorge périphérique externe 68 du corps 51 est sur le même plan radial que la surface d'extrémité arrière 108 de la bague de verrouillage 53 ou décalée vers l'avant par rapport à la surface d'extrémité arrière 108 de la bague de verrouillage 53, ce qui rend visible à l'opérateur que le raccord fluidique 1 est en configuration accouplée. L'outil 139 peut être retiré. Comme visible aux figures 9 et 10, une goupille élastique 141 est déformée élastiquement par l'opérateur et engagée dans la gorge périphérique externe 68, afin de former une butée au déplacement vers l'arrière, selon la direction B2, de la bague de verrouillage 53 et de maintenir la bague de verrouillage 53 en position avancée de verrouillage.

La goupille élastique 141 est sollicitée uniquement si la bague de verrouillage 53 est tirée vers l'arrière puisque l'effort de rappel exercé par le premier ressort 59 sur la bague de verrouillage 53 n'est pas transmis à la bague de verrouillage 53 en raison du contact cylindrique entre les éléments de verrouillage 55 et la surface de recouvrement 109, qui ne génère pas d'effort longitudinal.

Dans la configuration accouplée du raccord fluidique 1, le corps complémentaire 5 est en butée longitudinale contre la face avant 129 du piston 57 par l'intermédiaire du support 25 et du joint frontal 132. La butée longitudinale entre la face avant 28 et la face avant 129 est réalisée par l'intermédiaire du joint d'étanchéité frontal 132 et est donc un contact étanche. Le support 25 a repoussé le piston 57 à l'encontre du premier ressort 59 sur environ 1 mm, le piston 57 n'est donc plus en butée avant contre le segment d'arrêt 133et recouvre encore davantage le joint d'étanchéité 118 porté par la gorge périphérique avant 111 de la bague de verrouillage 53, par rapport à la configuration désaccouplée, pour une meilleure protection contre la pollution. Le piston 57 n'est pas en butée arrière contre la bague de verrouillage 53. Le piston 57 est alors décalé selon la direction arrière B2 par rapport à sa position dans laquelle il est en butée avant contre le corps 51. La bague de verrouillage 53 est en position avancée. L'extrémité arrière de la jupe arrière 101 de la bague de verrouillage 53 coopère de manière étanche avec le corps 51 par l'intermédiaire du joint torique 117. Ainsi, l'espace interne délimité radialement entre le corps 51 et le piston 57, entre le corps 51 et la bague de verrouillage 53 et entre le piston 57 et la bague de verrouillage 53 est préservé des poussières extérieures et les joints d'étanchéité 132, 117, 118, forment une barrière d'étanchéité secondaire entre, d'une part, le canal interne complémentaire 7 et le canal interne 69 et, d'autre part, l'extérieur du raccord fluidique 1 en cas de défaillance du joint d'étanchéité 37.

Lors de l'accouplement, l'effort d'écartement longitudinal de la gorge de manutention 70 et de la gorge de manutention 115 n'a à lutter contre l'effort élastique du premier ressort 59 que lorsque le support 25 est en appui contre le joint frontal 132, c'est-à-dire uniquement sur la dernière partie de la course de la bague de verrouillage 53 de la position reculée de déverrouillage à la position avancée de verrouillage.

En configuration accouplée, grâce au premier ressort 59, la position longitudinale du piston 57 par rapport au corps 51 s'est adaptée à la position longitudinale de la face avant 28 par rapport à la surface distale 17 de la gorge externe de verrouillage 11.

Si le raccord fluidique 1 est soumis à des vibrations en configuration accouplée, le premier ressort 59 repousse la surface inclinée 17 au contact des éléments de verrouillage 55 et limite les micro-mouvements entre corps complémentaire 5 et corps 51.

En configuration accouplée, la canalisation 66 communique fluidiquement avec le conduit interne 29 via le canal interne complémentaire 7 et le canal interne 69.

L'élément de raccord 50 est donc configuré pour une connexion de la canalisation 66 au conduit interne 29 du support 25.

Pour désaccoupler le raccord fluidique 1, l'opérateur doit retirer la goupille élastique 141 et déplacer la bague de verrouillage 53 jusqu'à sa position reculée de déverrouillage. Ce déplacement est effectué, après que l'opérateur ait enlevé la goupille 141, à l'aide de l'outil 139 engagé dans la gorge de manutention 70 de la partie arrière 65 et dans la gorge de manutention 115 de la bague de verrouillage 53 dans le but de rapprocher longitudinalement la gorge de manutention 70 et la gorge de manutention 115. En position reculée de déverrouillage de la bague de verrouillage 53, les éléments de verrouillage 55 sont alors libres de se déplacer vers leur position externe de déverrouillage respective et de libérer le passage pour le corps complémentaire 5 dans le volume interne de réception 71 en vue du retrait du corps complémentaire 5 hors du corps 51 de l'élément de raccord fluidique 50 et du retrait de la totalité de l'élément de raccord fluidique complémentaire 3 hors de l'élément de raccord fluidique 50. Lorsque le corps complémentaire 5 est dégagé hors de l'élément de raccord fluidique 50 et que toute action de l'outil 139 ou de l'opérateur sur la bague de verrouillage 53 est relâchée, la bague de verrouillage 53 est rappelée par le deuxième ressort 61 vers sa position avancée de verrouillage, la surface évasée 107 repoussant les éléments de verrouillage 55 vers leur position interne de verrouillage, avec les tiges transversales 81 en butée contre les fonds 83. Lors du déplacement du corps complémentaire 5 hors du corps 51, le support 25 s'écarte du piston 57 et le piston 57 est repoussé par le premier ressort 59 en butée avant contre le segment d'arrêt 133, donc contre le corps 51.

L'élément de raccord est prêt pour un nouvel accouplement.

Le processus d'accouplement du raccord fluidique 1 nécessite ainsi seulement la manipulation de la bague de verrouillage 53 par rapport au corps 51 entre une position avancée de verrouillage et une position reculée de déverrouillage, ce qui facilite l'accouplement.

En variante non représentée, la partie avant 63 et la partie arrière 65 du corps 51 peuvent être monoblocs, c'est-à-dire formées par une même pièce.

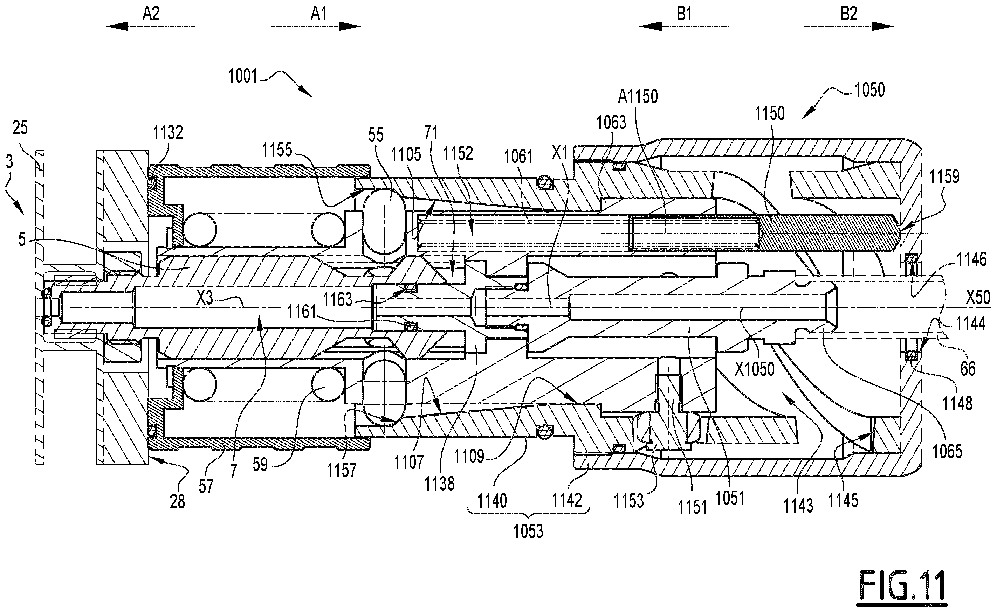

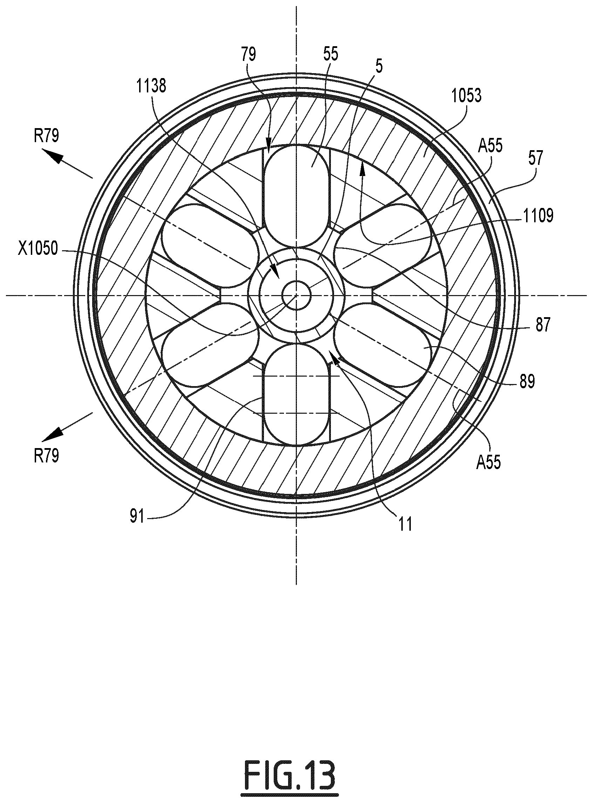

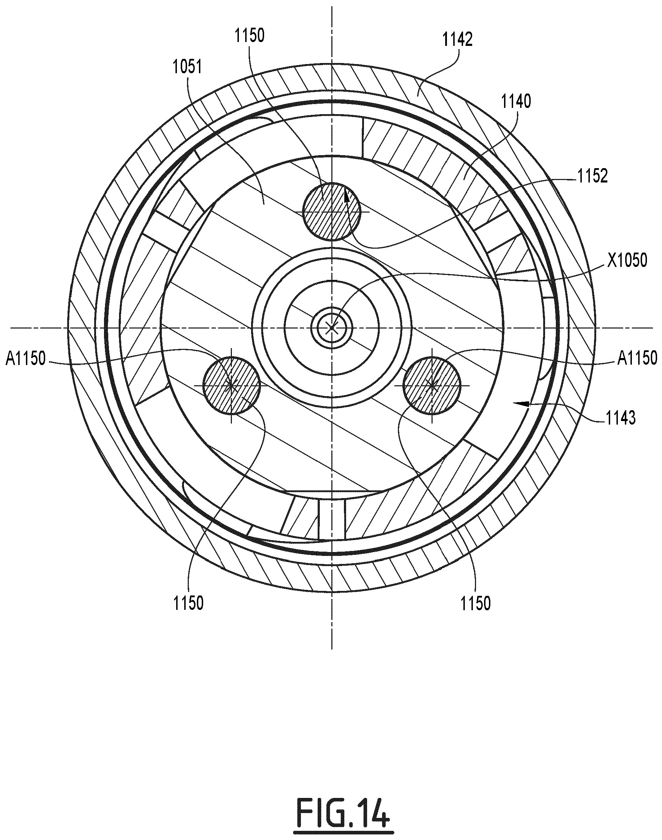

Les figures 11 à 15, illustrent un raccord fluidique 1001 selon un deuxième mode de réalisation de l'invention, le raccord fluidique 1001 étant identique à l'ensemble de raccordement 1 du premier mode de réalisation sauf pour les caractéristiques décrites ci-après. Les signes de référence pour le dispositif de raccordement fluidique 1001 correspondent à ceux du dispositif de raccordement fluidique 1 lorsque que l'élément référencé est inchangé. Les signes de référence sont augmentés de 1000 lorsqu'ils désignent des éléments similaires mais modifiés dans le dispositif de raccordement 1001. Si une référence est mentionnée dans la suite de la description sans être portée sur l'une des figures 11 à 15, ou portée sur l'une de ces figures sans être mentionnée dans la description, elle concerne le même élément que celui portant la même référence dans le premier mode de réalisation.

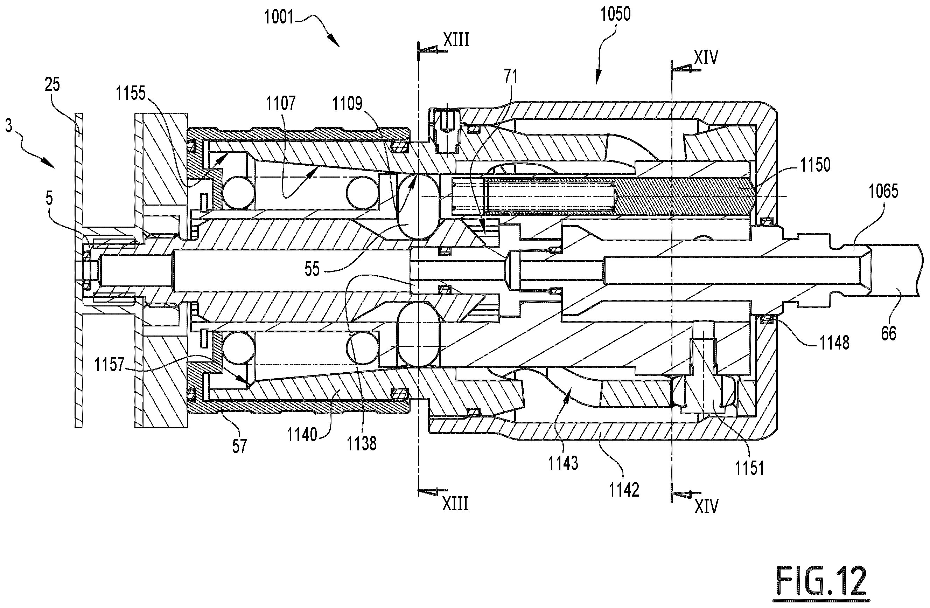

L'élément de raccord fluidique 1050 comprend un corps 1051 formé d'une partie avant 1063, d'une partie arrière 1065 et d'une partie intermédiaire 1138. La partie avant 1063 forme l'embouchure 64. La partie avant 1063 est maintenue longitudinalement entre la partie arrière 1065, destinée à être reliée à la canalisation 66, et la partie intermédiaire 1138 vissée avec la partie arrière 1065. La canalisation 66 est représentée en vue extérieure, uniquement sur les figures 11 et 12. Les logements 79 sont formés dans la partie avant 1063.

La partie intermédiaire 1138 est configuré pour pénétrer dans le canal interne complémentaire 7 du corps complémentaire 5 lorsque l'élément de raccord complémentaire 3 est emmanché dans le corps 1051. Le volume interne de réception 71 du corps complémentaire 5 est délimité par la surface radiale interne de la partie avant 1063 et par la surface radiale externe de la partie intermédiaire 1038.

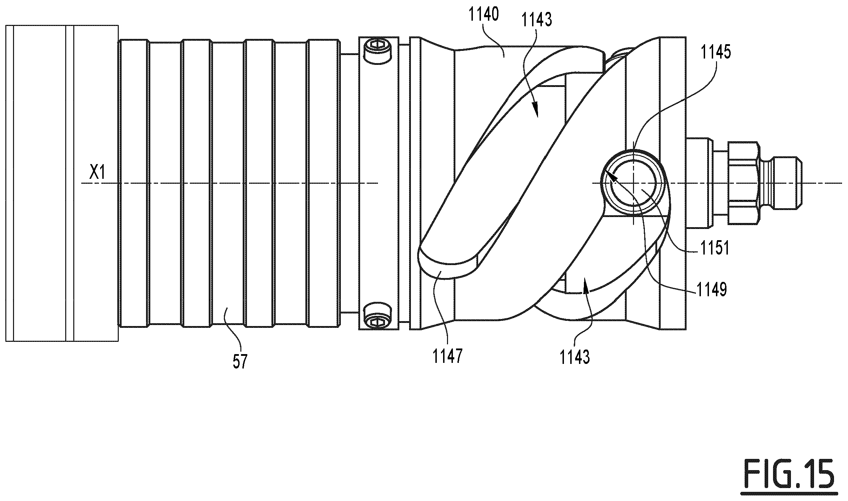

La bague de verrouillage 1053 est formé d'une pièce interne 1140 et d'une pièce externe 1142 montée autour de la pièce interne 1140 et solidarisée avec la pièce interne 1140 avec interposition d'un joint d'étanchéité. Comme visible à la figure 15, la pièce interne 1140 comprend trois rainures 1143 hélicoïdales traversant radialement la pièce interne 1140. Chacune des rainures 1143 est bornée, c'est-à-dire non débouchante à une première extrémité 1145 et à une deuxième extrémité 1147. La première extrémité 1145 comprend une encoche 1149. La pièce externe 1142 protège les trois rainures 1143 de la pollution extérieure.

La surface interne de verrouillage 1105, portée par la pièce interne 1140, comprend la surface de recouvrement 1109 et la surface évasée 1107 et comprend également une surface radiale distale 1155, la surface évasée 1107 étant disposée longitudinalement entre la surface de recouvrement 1109 et la surface radiale distale 1155. La surface radiale distale 1155 n'est pas le prolongement continu de la surface évasée 1107. En effet, la surface interne de verrouillage 1105 présente un épaulement 1157 en forme de chanfrein interne entre la surface évasée 1107 et la surface radiale distale 1155.

Comme visible à la figure 11, la surface radiale distale 1155, recouvre radialement les éléments de verrouillage 55 en position externe de déverrouillage, lorsque la bague de verrouillage 1053 est en position reculée de déverrouillage. La surface radiale distale 1155 forme une butée externe aux éléments de verrouillage 55 et les maintient dans les logements 79. La fonction de la surface radiale distale 1155 est la même que la fonction assurée, dans le premier mode de réalisation, par le piston 57.

La pièce externe 1142 présente une surface radiale interne 1144 qui comprend une gorge 1146. Un joint d'étanchéité 1148 est logé dans la gorge 1146. Préférentiellement, le joint d'étanchéité 1148 coopère avec la canalisation 66 pour créer une barrière étanche aux poussières entre le volume interne de la bague de verrouillage 1053 et l'extérieur de l'élément de raccord fluidique 1050 sur l'arrière en configuration désaccouplée.

L'élément de raccord fluidique 1050 comprend trois doigts 1150 qui sont logés, respectivement, dans des logements allongés 1152, délimités par le corps 1051. Chaque doigt 1150 est mobile en translation suivant un axe longitudinal A1150 du logement allongé 1152 dans lequel il est reçu. Les trois logements allongés 1152 sont régulièrement répartis autour de l'axe longitudinal X1050 de l'élément de raccord fluidique 1050 et les axes A1150 et X1050 sont parallèles, comme visible aux figures 11, 12 et 14.

L'élément de raccord fluidique 1050 comprend, avantageusement, trois pions 1151. Les pions 1151 sont vissés sur le corps 1051 sans possibilité de mouvement. Chacun des pions 1151 comprend une tête 1153 qui est engagée, lorsque l'élément de raccord fluidique 1050 est assemblé, dans une rainure 1143 associée, de manière à former une liaison baïonnette entre le corps 1051 et la bague de verrouillage 1053.

L'élément de raccord 1050 est considéré assemblé dans la suite de la description.

En raison de la liaison baïonnette entre le corps 1051 et la bague de verrouillage 1053, le mouvement de la bague de verrouillage 1053 par rapport au corps 1051 est un mouvement combiné de rotation autour du corps 1051 et de coulissement longitudinal par rapport au corps 1051. Lorsque les pions 1151 coopèrent avec la première extrémité 1145 ou extrémité arrière, de la rainure 1143, la bague de verrouillage 1053 est en position avancée de verrouillage. Lorsque les pions 1151 coopèrent avec la deuxième extrémité 1147, ou extrémité avant, de la rainure 1143, la bague de verrouillage 1053 est en position reculée de déverrouillage. Les extrémités 1145 et 1147 de chaque rainure 1143 sont opposées l'une à l'autre.

La liaison baïonnette entre le corps 1051 et bague de verrouillage 1053 permet, lors du déplacement de la bague de verrouillage 1053 longitudinalement entre sa position avancée de verrouillage et sa position reculée de déverrouillage par rapport au corps 1051, de démultiplier l'effort exercé sur la bague de verrouillage 1053, de manière à obtenir le déplacement du corps complémentaire 5 à l'encontre du premier ressort 59, pour atteindre la configuration accouplée depuis la deuxième configuration intermédiaire d'accouplement. Grace à la liaison baïonnette, l'utilisation d'un outil du type de l'outil 139 décrit en référence au premier mode de réalisation, pour atteindre la configuration accouplée depuis la deuxième configuration intermédiaire d'accouplement, n'est pas nécessaire, voire est inutile.

Le joint d'étanchéité frontal 1132 porté par la face avant 129 du piston 57 est un joint torique.

Le raccord fluidique 1001 comprend trois deuxièmes ressorts 1061, respectivement, logés dans les logements allongés 1152 et interposés entre le corps 1051 et la bague de verrouillage 1053 par l'intermédiaire des doigts 1150.

Pour chaque doigt 1150, une extrémité arrière 1159, opposée au deuxième ressort 1061 associé, est maintenue en appui arrière contre la pièce externe 1142 de la bague de verrouillage 1053 par le deuxième ressort 1061 associé, repoussant élastiquement la bague de verrouillage 1053 vers la position reculée de déverrouillage.

Lorsque la bague de verrouillage 1053 est en position avancée de verrouillage, comme visible aux figure 12 et 15, l'effort élastique des deuxièmes ressorts 1061 repousse les pions 1151 en contact avec les encoches 1149 des rainures 1143. Du fait de la géométrie des encoches 1149, la rotation des pions 1151 est empêchée tant que les pions 1151 ne sont pas repoussés vers l'arrière de la bague de verrouillage 1053. En d'autres termes, les deuxièmes ressorts 1061 s'opposent au mouvement des pions 1151 hors des encoches 1149, ce qui empêche la rotation intempestive de la bague de verrouillage 1053 vers la position reculée de déverrouillage.

Les étapes d'accouplement du raccord 1001 sont similaires aux étapes d'accouplement du raccord 1 du premier mode de réalisation, à l'exception de l'absence d'une configuration intermédiaire comme celle de la figure 6, la bague de verrouillage 1053 de l'élément de raccord fluidique 1050 étant en position reculée de déverrouillage en configuration désaccouplée, et de l'absence d'utilisation de l'outil 139 pour atteindre la configuration accouplée depuis la deuxième configuration intermédiaire d'accouplement.

L'étanchéité entre le corps 1051 et le corps complémentaire 5 est assurée en configuration accouplée par un joint torique 1161 logé dans une gorge périphérique externe 1163 de la partie intermédiaire 1138 du corps 1051 et coopérant avec la surface interne du corps complémentaire 5 délimitant le canal interne complémentaire 7.

En configuration accouplée de l'élément de raccord fluidique 1050 et de l'élément de raccord fluidique complémentaire 3, l'étanchéité entre la partie arrière 1065 du corps 1051 et la bague de verrouillage 1053 est réalisée par le joint d'étanchéité 1148 qui est en contact avec la partie arrière 1065 lorsque la bague de verrouillage est en position avancée de verrouillage, comme visible à la figure 12.

Le deuxième mode de réalisation a été décrit avec des pions 1151 formés sur le corps 1051 et des rainures 1143 formées sur la bague de verrouillage 1053. En variante non représentée, les rainures sont formées sur le corps 1051 et les pions sont formés sur la bague de verrouillage 1053.

Toute caractéristique décrite ci-avant pour un mode de réalisation ou une variante est applicable aux autres modes de réalisation et variantes décrits ci-avant, pour autant que cela est techniquement possible.

## Revendications

1. Elément de raccord fluidique (50 ; 1050), qui comprend :
- un corps (51 ; 1051), centré sur un axe longitudinal (X50 ; X1050), le corps (51 ; 1051) comprenant :
▪ un volume interne de réception (71) d'un élément de raccord fluidique complémentaire (3), le volume interne de réception (71) débouchant du corps (51 ; 1051) par une embouchure (64), selon une direction avant (B1), et
▪ plusieurs logements (79), chaque logement (79) traversant le corps (51 ; 1051) et débouchant radialement vers l'intérieur dans le volume interne de réception (71) ;
- dans chaque logement (79), un élément de verrouillage (55), qui est mobile dans le logement (79) entre :
∘ une position interne de verrouillage, dans laquelle l'élément de verrouillage (55) fait saillie dans le volume interne de réception (71) et est apte à s'engager dans une gorge externe de verrouillage (11) de l'élément de raccord fluidique complémentaire (3) emmanché dans le volume interne de réception (71) pour s'opposer au retrait de l'élément de raccord fluidique complémentaire (3) hors de l'élément de raccord fluidique (50 ; 1050), et
∘ une position externe de déverrouillage, dans laquelle l'élément de verrouillage (55) ne s'oppose pas au retrait de l'élément de raccord fluidique complémentaire (3) hors de l'élément de raccord fluidique (50 ; 1050); et
- une bague de verrouillage (53; 1053), montée coulissante autour du corps (51 ; 1051), comprenant une surface interne de verrouillage (105; 1105) comportant :
∘ au moins une surface évasée (107; 1107) divergeant selon la direction avant (B1), et
∘ une surface de recouvrement (109; 1109) cylindrique qui est disposée en continuité de la surface évasée (107; 1107) selon une direction arrière (B2), opposée à la direction avant (B1),
la bague de verrouillage (53; 1053) étant mobile longitudinalement par rapport au corps (51 ; 1051) de l'élément de raccord fluidique (50 ; 1050) entre :
∘ une position avancée de verrouillage, dans laquelle la bague de verrouillage (53 ; 1053) est en butée avant contre le corps (51 ; 1051) et la surface de recouvrement (109; 1109) entoure radialement les éléments de verrouillage (55) et les maintient en position interne de verrouillage, et
∘ une position reculée de déverrouillage, dans laquelle la bague de verrouillage (53 ; 1053) ne s'oppose pas au déplacement des éléments de verrouillage (55) dans leur logement (79) respectif jusqu'à leur position externe de déverrouillage,
alors que, la surface évasée (107 ; 1107) est apte à coopérer radialement avec les éléments de verrouillage (55), entre la position avancée de verrouillage et la position reculée de déverrouillage de la bague de verrouillage (53 ; 1053), l'élément de raccord fluidique (50 ; 1050) comprenant :
- un piston (57) disposé autour du corps (51 ; 1051) et autour de la bague de verrouillage (53 ; 1053) et mobile longitudinalement par rapport au corps (51 ; 1051) et par rapport à la bague de verrouillage (53; 1053),
- un premier ressort (59) repoussant le piston (57) selon la direction avant (B1) de l'élément de raccord fluidique (50 ; 1050) vers une position où le piston (57) est en butée dans la direction avant (B1) contre le corps (51 ; 1051).

2. Elément de raccord fluidique (50 ; 1050) selon la revendication précédente dans lequel :
- les éléments de verrouillage (55) sont des segments allongés comprenant une extrémité interne (87) en portion de sphère et une extrémité externe (89) en portion de sphère disposées de part et d'autre d'une portion médiane (91) cylindrique qui est complémentaire du logement (79) associé et
- chaque logement (79) s'étend selon une direction (R79) respective radiale à l'axe longitudinal (X50 ; X1050).

3. Elément de raccord fluidique (50 ; 1050) selon l'une quelconque des revendications précédentes comprenant, pour chaque élément de verrouillage (55), une tige transversale (93) solidaire de l'élément de verrouillage (55) et qui fait saillie d'une surface externe (85) de l'élément de verrouillage (55), dans lequel le corps (51 ; 1051) comprend pour chaque logement (79) au moins une rainure latérale (81) qui débouche transversalement dans le logement (79) et radialement sur une surface radiale externe (77) du corps (51 ; 1051), la tige transversale (93) étant engagée dans la rainure latérale (81), de manière que lorsque l'élément de verrouillage (55) est déplacé de sa position interne de verrouillage à sa position externe de déverrouillage, ou réciproquement, la tige transversale (93) est déplacée dans la rainure latérale (81) et qu'un fond (83) de la rainure latérale (81) forme une butée à la tige transversale (93) qui limite le mouvement de l'élément de verrouillage (55) dans le logement (79) vers le volume interne de réception (71) et dans lequel un axe longitudinal (T93) de la tige transversale (93) est incliné, par rapport un plan radial (P3) perpendiculaire à l'axe longitudinal (X50 ; X1050) et par rapport à un plan longitudinal (P2) passant par l'axe longitudinal (X50 ; X1050).

4. Elément de raccord fluidique (50 ; 1050) selon l'une quelconque des revendications précédentes comprenant au moins un deuxième ressort (61; 1061) exerçant, sur la bague de verrouillage (53; 1053), un effort qui s'oppose au mouvement de la bague de verrouillage (53; 1053) vers sa position reculée de déverrouillage au moins lorsque la bague de verrouillage (53; 1053) est en position avancée de verrouillage.

5. Elément de raccord fluidique (50) selon la revendication précédente dans lequel le deuxième ressort (61) est interposé entre la bague de verrouillage (53) et le corps (51) de l'élément de raccord fluidique et repousse la bague de verrouillage (53) vers sa position avancée de verrouillage, la bague de verrouillage (53) étant, en configuration désaccouplée de l'élément de raccord fluidique (50), en position avancée de verrouillage.

6. Elément de raccord fluidique (1050) selon la revendication 4, dans lequel :
- une liaison baïonnette par coopération d'au moins un pion (1151) avec un rainure (1143) hélicoïdale est formée entre le corps (1051) de l'élément de raccord fluidique et la bague de verrouillage (1053), la rainure (1143) présentant une encoche (1149) formant une première extrémité (1145) de la rainure (1143),
- lorsque la bague de verrouillage (1053) est en position avancée de verrouillage, le pion (1151) coopère avec l'encoche (1149) de la rainure (1143) et chaque deuxième ressort (1061) s'oppose au mouvement du pion (1151) hors de l'encoche (1149), et
- la bague de verrouillage (1053) est en position reculée de déverrouillage lorsque le pion (1151) coopère avec une deuxième extrémité (1147) de la rainure (1143), opposée à la première extrémité.

7. Elément de raccord fluidique (50 ; 1050) selon l'une quelconque des revendications précédentes dans lequel le piston (57) comprend une base avant (127), qui coopère à jeu radial réduit avec une surface radiale externe du corps (51 ; 1051), et une jupe arrière (125) montée autour de la bague de verrouillage (53; 1053), la bague de verrouillage (53; 1053) étant recouverte radialement à jeu radial réduit par la jupe arrière (125) du piston (57) dans toutes les positions de la bague de verrouillage (53 ; 1053) par rapport au corps (51 ; 1051) de la position reculée de déverrouillage à la position avancée de verrouillage.

8. Elément de raccord fluidique (50 ; 1050) selon l'une quelconque des revendications précédentes dans lequel le piston (57) dépasse du corps (51 ; 1051) selon la direction avant (B1) au moins dans une configuration désaccouplée de l'élément de raccord fluidique (50 ; 1050).

9. Elément de raccord fluidique (50 ; 1050) selon l'une quelconque des revendications précédentes dans lequel :
- la bague de verrouillage (53; 1053) comprend un chanfrein interne (106) qui diverge selon la direction avant (B1),
- en position reculée de déverrouillage de la bague de verrouillage (53; 1053), la bague de verrouillage (53; 1053) est en butée arrière contre le corps (51 ; 1051) et le chanfrein interne (106) est en regard longitudinal des éléments de verrouillage (55), et
- en position reculée de déverrouillage de la bague de verrouillage (53; 1053), le piston (57) forme une butée radiale externe aux éléments de verrouillage (55).

10. Elément de raccord fluidique (50) selon l'une quelconque des revendications précédentes dans lequel :
- le corps (51) de l'élément de raccord fluidique (50) comprend une gorge périphérique externe (68) présentant une surface distale (72),
- la gorge périphérique externe (68) est radialement découverte par la bague de verrouillage (53) en position avancée de verrouillage et radialement recouverte par la bague de verrouillage (53) en position reculée de déverrouillage, et
- lorsque la surface distale (72) de la gorge périphérique externe du corps (51) est sur le même plan radial qu'une surface d'extrémité arrière (108) de la bague de verrouillage (53), la surface de recouvrement (109) de la bague de verrouillage (53) maintient les éléments de verrouillage (55) en position interne de verrouillage.

11. Elément de raccord fluidique (50) selon l'une quelconque des revendications précédentes dans lequel :
- la bague de verrouillage (53) présente une gorge de manutention (115),
- le corps (51) de l'élément de raccord fluidique (50) présente une gorge de manutention (70), la gorge de manutention (115) de la bague de verrouillage (53) et la gorge de manutention (70) du corps (51) étant configurées pour recevoir un outil (139), afin de déplacer longitudinalement la bague de verrouillage (53) par rapport au corps (51), et
- la gorge de manutention (70) ménagée sur le corps (51) est découverte par la bague de verrouillage (53) au moins lorsque celle-ci est longitudinalement entre une position intermédiaire, disposée entre la position avancée de verrouillage et la position reculée de déverrouillage, et la position avancée de verrouillage.

12. Raccord fluidique (1 ; 1001) comprenant :
- un élément de raccord fluidique (50 ; 1050) selon l'une quelconque des revendications précédentes, et
- un élément de raccord fluidique complémentaire (3), comprenant un corps complémentaire (5) formant la gorge externe de verrouillage (11).

13. Raccord fluidique (1; 1001) selon la revendication précédente comprenant un support (25) fixé longitudinalement au corps complémentaire (5) et qui comprend une face avant (28) qui est disposée autour de l'élément de raccord fluidique complémentaire (3), le raccord fluidique étant configuré pour que, dans une configuration accouplée du raccord fluidique (1),
∘ la bague de verrouillage (53) soit en position avancée de verrouillage,
∘ les éléments de verrouillage (55) soient engagés dans la gorge externe de verrouillage (11) au contact d'une surface distale inclinée (17) de cette gorge,
∘ une face avant (129) du piston (57) soit en butée longitudinale contre la face avant (28) du support (25) et
∘ le piston (57) soit décalé selon la direction arrière (B2) par rapport à sa position en butée avant contre le corps (51 ; 1051).

14. Raccord fluidique (1 ; 1001) selon l'une quelconque des revendications 12 ou 13 dans lequel un rapport entre :
- d'une part, un angle (α) défini entre la surface distale inclinée (17) de la gorge externe de verrouillage (11) et un axe longitudinal (X3) de l'élément complémentaire de raccord (3),
- d'autre part, un angle (δ) défini entre la surface évasée (107; 1107) et l'axe longitudinal (X50 ; X1050) de l'élément de raccord fluidique (50 ; 1050),
est compris entre 4 et 12.

15. Raccord fluidique (1 ; 1001) selon l'une quelconque des revendications 12 à 14 dans lequel :
- le corps complémentaire (5) comprend une surface radiale externe (9) étagée,
et
- le corps (51 ; 1051) de l'élément de raccord fluidique (50 ; 1050) présente une surface radiale interne (73) étagée, délimitant le volume interne de réception (71),
- la surface radiale externe (9) étagée et la surface radiale interne (73) étagée sont configurées pour coopérer par complémentarité de formes en cours d'accouplement du raccord fluidique (1).

## Patentansprüche

1. Fluidanschlusselement (50 ; 1050), das umfasst:
- einen Körper (51 ; 1051), der auf einer Längsachse (X50 ; X1050) zentriert ist, wobei der Körper (51 ; 1051) umfasst:
▪ ein inneres Aufnahmevolumen (71) für ein komplementäres Fluidanschlusselement (3), wobei das innere Aufnahmevolumen (71) aus dem Körper (51 ; 1051) durch eine Mündung (64) in einer Vorwärtsrichtung (B1) mündet, und
▪ mehrere Aufnahmen (79), wobei jede Aufnahme (79) den Körper (51 ; 1051) durchquert und radial nach innen in das innere Aufnahmevolumen (71) mündet;
- in jeder Aufnahme (79) ein Verriegelungselement (55), das in der Aufnahme (79) beweglich ist zwischen:
∘ einer inneren Verriegelungsstellung, in der das Verriegelungselement (55) in das innere Aufnahmevolumen (71) hineinragt und geeignet ist, in eine äußere Verriegelungsnut (11) des in das innere Aufnahmevolumen (71) eingesteckten komplementären Fluidanschlusselements (3) einzugreifen, um dem Herausziehen des komplementären Fluidanschlusselements (3) aus dem Fluidanschlusselement (50 ; 1050) entgegenzuwirken, und
∘ einer äußeren Entriegelungsstellung, in der das Verriegelungselement (55) dem Herausziehen des komplementären Fluidanschlusselements (3) aus dem Fluidanschlusselement (50 ; 1050) nicht entgegenwirkt; und
- einen Verriegelungsring (53; 1053), der um den Körper (51 ; 1051) gleitend montiert ist und eine innere Verriegelungsfläche (105; 1105) umfasst, die aufweist:
∘ mindestens eine aufgeweitete Fläche (107; 1107), die in der Vorwärtsrichtung (B1) divergiert, und
∘ eine zylindrische Überdeckungsfläche (109; 1109), die in einer Rückwärtsrichtung (B2), entgegengesetzt zur Vorwärtsrichtung (B1), unmittelbar an die aufgeweitete Fläche (107; 1107) anschließend angeordnet ist,
wobei der Verriegelungsring (53; 1053) bezüglich des Körpers (51 ; 1051) des Fluidanschlusselements (50 ; 1050) längsbeweglich ist zwischen:
∘ einer vorgeschobenen Verriegelungsstellung, in der der Verriegelungsring (53; 1053) nach vorne am Körper (51 ; 1051) anliegt und die Überdeckungsfläche (109; 1109) die Verriegelungselemente (55) radial umgibt und sie in der inneren Verriegelungsstellung hält, und
∘ einer zurückgezogenen Entriegelungsstellung, in der der Verriegelungsring (53 ; 1053) der Bewegung der Verriegelungselemente (55) in ihrer jeweiligen Aufnahme (79) bis zu ihrer äußeren Entriegelungsstellung nicht entgegenwirkt,
während die aufgeweitete Fläche (107 ; 1107) geeignet ist, zwischen der vorgeschobenen Verriegelungsstellung und der zurückgezogenen Entriegelungsstellung des Verriegelungsrings (53; 1053) radial mit den Verriegelungselementen (55) zusammenzuwirken, wobei das Fluidanschlusselement (50 ; 1050) umfasst:
- einen Kolben (57), der um den Körper (51; 1051) und um den Verriegelungsring (53 ; 1053) angeordnet und bezüglich des Körpers (51 ; 1051) und bezüglich des Verriegelungsrings (53; 1053) längsbeweglich ist,
- eine erste Feder (59), die den Kolben (57) in der Vorwärtsrichtung (B1) des Fluidanschlusselements (50; 1050) zu einer Stellung drückt, in der der Kolben (57) in der Vorwärtsrichtung (B1) am Körper (51 ; 1051) anliegt.

2. Fluidanschlusselement (50 ; 1050) nach dem vorhergehenden Patentanspruch, bei dem:
- die Verriegelungselemente (55) längliche Segmente sind, die ein inneres Ende (87) in Form eines Kugelabschnitts und ein äußeres Ende (89) in Form eines Kugelabschnitts umfassen, die beiderseits eines zylindrischen mittleren Abschnitts (91) angeordnet sind, der zur zugehörigen Aufnahme (79) komplementär ist, und
- sich jede Aufnahme (79) in einer jeweiligen Richtung (R79) erstreckt, die zur Längsachse (X50 ; X1050) radial verläuft.

3. Fluidanschlusselement (50 ; 1050) nach einem der vorhergehenden Patentansprüche, umfassend für jedes Verriegelungselement (55) einen Querstift (93), der fest mit dem Verriegelungselement (55) verbunden ist und von einer Außenfläche (85) des Verriegelungselements (55) hervorsteht, wobei der Körper (51 ; 1051) für jede Aufnahme (79) mindestens eine seitliche Nut (81) umfasst, die quer in die Aufnahme (79) und radial an einer äußeren radialen Fläche (77) des Körpers (51 ; 1051) mündet, wobei der Querstift (93) in die seitliche Nut (81) eingreift, sodass, wenn das Verriegelungselement (55) von seiner inneren Verriegelungsstellung in seine äußere Entriegelungsstellung oder umgekehrt bewegt wird, der Querstift (93) in der seitlichen Nut (81) bewegt wird und ein Grund (83) der seitlichen Nut (81) einen Anschlag für den Querstift (93) bildet, der die Bewegung des Verriegelungselements (55) in der Aufnahme (79) zum inneren Aufnahmevolumen (71) hin begrenzt, und wobei eine Längsachse (T93) des Querstifts (93) gegenüber einer zur Längsachse (X50; X1050) senkrechten Radialebene (P3) und gegenüber einer durch die Längsachse (X50 ; X1050) verlaufenden Längsebene (P2) geneigt ist.

4. Fluidanschlusselement (50 ; 1050) nach einem der vorhergehenden Patentansprüche, umfassend mindestens eine zweite Feder (61 ; 1061), die auf den Verriegelungsring (53; 1053) eine Kraft ausübt, die der Bewegung des Verriegelungsrings (53; 1053) zu seiner zurückgezogenen Entriegelungsstellung hin zumindest dann entgegenwirkt, wenn sich der Verriegelungsring (53; 1053) in der vorgeschobenen Verriegelungsstellung befindet.

5. Fluidanschlusselement (50) nach dem vorhergehenden Patentanspruch, bei dem die zweite Feder (61) zwischen dem Verriegelungsring (53) und dem Körper (51) des Fluidanschlusselements angeordnet ist und den Verriegelungsring (53) zu seiner vorgeschobenen Verriegelungsstellung hindrückt, wobei sich der Verriegelungsring (53) in einer entkuppelten Konfiguration des Fluidanschlusselements (50) in der vorgeschobenen Verriegelungsstellung befindet.

6. Fluidanschlusselement (1050) nach Patentanspruch 5, bei dem:
- eine Bajonettverbindung durch Zusammenwirken mindestens eines Stifts (1151) mit einer schraubenförmigen Nut (1143) zwischen dem Körper (1051) des Fluidanschlusselements und dem Verriegelungsring (1053) gebildet ist, wobei die Nut (1143) eine Kerbe (1149) aufweist, die ein erstes Ende (1145) der Nut (1143) bildet,
- wenn sich der Verriegelungsring (1053) in der vorgeschobenen Verriegelungsstellung befindet, der Stift (1151) mit der Kerbe (1149) der Nut (1143) zusammenwirkt und jede zweite Feder (1061) der Bewegung des Stifts (1151) aus der Kerbe (1149) heraus entgegenwirkt, und
- der Verriegelungsring (1053) sich in der zurückgezogenen Entriegelungsstellung befindet, wenn der Stift (1151) mit einem zweiten Ende (1147) der Nut (1143) zusammenwirkt, das dem ersten Ende gegenüberliegt.

7. Fluidanschlusselement (50 ; 1050) nach einem der vorhergehenden Patentansprüche, bei dem der Kolben (57) eine vordere Basis (127), die mit einer äußeren radialen Fläche des Körpers (51 ; 1051) mit geringem radialem Spiel zusammenwirkt, und einen hinteren Mantel (125) umfasst, der um den Verriegelungsring (53; 1053) montiert ist, wobei der Verriegelungsring (53; 1053) in allen Stellungen des Verriegelungsrings (53 ; 1053) bezüglich des Körpers (51 ; 1051) von der zurückgezogenen Entriegelungsstellung bis zur vorgeschobenen Verriegelungsstellung durch den hinteren Mantel (125) des Kolbens (57) mit geringem radialem Spiel radial überdeckt ist.

8. Fluidanschlusselement (50 ; 1050) nach einem der vorhergehenden Patentansprüche, bei dem der Kolben (57) zumindest in einer entkuppelten Konfiguration des Fluidanschlusselements (50 ; 1050) in der Vorwärtsrichtung (B1) über den Körper (51 ; 1051) hinausragt.

9. Fluidanschlusselement (50 ; 1050) nach einem der vorhergehenden Patentansprüche, bei dem:
- der Verriegelungsring (53; 1053) eine innere Fase (106) umfasst, die in der Vorwärtsrichtung (B1) divergiert,
- in der zurückgezogenen Entriegelungsstellung des Verriegelungsrings (53; 1053) der Verriegelungsring (53; 1053) nach hinten am Körper (51 ; 1051) anliegt und die innere Fase (106) den Verriegelungselementen (55) in Längsrichtung gegenüberliegt, und
- in der zurückgezogenen Entriegelungsstellung des Verriegelungsrings (53; 1053) bildet der Kolben (57) einen radial äußeren Anschlag für die Verriegelungselemente (55).

10. Fluidanschlusselement (50) nach einem der vorhergehenden Patentansprüche, wobei:
- der Körper (51) des Fluidanschlusselements (50) eine äußere Umfangsnut (68) mit einer distalen Fläche (72) aufweist,
- die äußere Umfangsnut (68) durch den Verriegelungsring (53) in der vorgeschobenen Verriegelungsstellung radial freigelegt und durch den Verriegelungsring (53) in der zurückgezogenen Entriegelungsstellung radial abgedeckt ist, und
- wenn die distale Fläche (72) der äußeren Umfangsnut des Körpers (51) in derselben radialen Ebene wie eine hintere Endfläche (108) des Verriegelungsrings (53) liegt, hält die Überdeckungsfläche (109) des Verriegelungsrings (53) die Verriegelungselemente (55) in der inneren Verriegelungsstellung.

11. Fluidanschlusselement (50) nach einem der vorhergehenden Patentansprüche, wobei:
- der Verriegelungsring (53) eine Handhabungsnut (115) aufweist,
- der Körper (51) des Fluidanschlusselements (50) eine Handhabungsnut (70) aufweist, wobei die Handhabungsnut (115) des Verriegelungsrings (53) und die Handhabungsnut (70) des Körpers (51) dazu ausgebildet sind, ein Werkzeug (139) aufzunehmen, um den Verriegelungsring (53) in Längsrichtung relativ zum Körper (51) zu bewegen, und
- die am Körper (51) ausgebildete Handhabungsnut (70) durch den Verriegelungsring (53) zumindest dann freigelegt ist, wenn sich dieser in Längsrichtung zwischen einer Zwischenstellung, die zwischen der vorgeschobenen Verriegelungsstellung und der zurückgezogenen Entriegelungsstellung angeordnet ist, und der vorgeschobenen Verriegelungsstellung befindet.

12. Fluidanschlussstück (1 ; 1001), umfassend:
- ein Fluidanschlusselement (50 ; 1050) nach einem der vorhergehenden Patentansprüche, und
- ein komplementäres Fluidanschlusselement (3), das einen komplementären Körper (5) umfasst, der die äußere Verriegelungsnut (11) bildet.

13. Fluidanschlussstück (1; 1001) nach dem vorhergehenden Patentanspruch, umfassend einen Träger (25), der in Längsrichtung am komplementären Körper (5) befestigt ist und eine Vorderseite (28) umfasst, die um das komplementäre Fluidanschlusselement (3) herum angeordnet ist, wobei das Fluidanschlussstück so ausgebildet ist, dass in einer gekuppelten Konfiguration des Fluidanschlussstücks (1)
∘ der Verriegelungsring (53) in der vorgeschobenen Verriegelungsstellung ist,
∘ die Verriegelungselemente (55) in die äußere Verriegelungsnut (11) im Kontakt mit einer geneigten distalen Fläche (17) dieser Nut eingreifen,
∘ eine Vorderseite (129) des Kolbens (57) in Längsrichtung an der Vorderseite (28) des Trägers (25) anliegt, und
∘ der Kolben (57) gegenüber seiner Stellung, in der er vorne am Körper (51 ; 1051) anliegt, in Rückwärtsrichtung (B2) versetzt ist.

14. Fluidanschlussstück (1 ; 1001) nach einem der Patentansprüche 12 oder 13, wobei ein Verhältnis zwischen:
- einerseits einem Winkel (α), der zwischen der geneigten distalen Fläche (17) der äußeren Verriegelungsnut (11) und einer Längsachse (X3) des komplementären Anschlusselements (3) definiert ist,
- andererseits einem Winkel (δ), der zwischen der aufgeweiteten Fläche (107; 1107) und der Längsachse (X50; X1050) des Fluidanschlusselements (50 ; 1050) definiert ist,
zwischen 4 und 12 liegt.

15. Fluidanschlussstück (1 ; 1001) nach einem der Patentansprüche 12 bis 14, wobei:
- der komplementäre Körper (5) eine abgestufte äußere radiale Fläche (9) umfasst, und
- der Körper (51 ; 1051) des Fluidanschlusselements (50 ; 1050) eine abgestufte innere radiale Fläche (73) aufweist, die das innere Aufnahmevolumen (71) begrenzt,
- die abgestufte äußere radiale Fläche (9) und die abgestufte innere radiale Fläche (73) dazu ausgebildet sind, beim Kuppeln des Fluidanschlussstücks (1) durch Formkomplementarität zusammenzuwirken.

## Claims

1. A fluidic coupling element (50; 1050), which comprises:
- a body (51; 1051) centered on a longitudinal axis (X50; X1050), the body (51; 1051) comprising:
▪ an inner receiver volume (71) of a mating fluidic coupling element (3), the inner receiver volume (71) opening out from the body (51; 1051) via a mouth (64), in a forward direction (B1), and
▪ a plurality of housings (79), each housing (79) extending through the body (51; 1051) and opening radially inwards into the inner receiver volume (71);
- in each housing (79), a locking element (55) which is movable in the housing (79) between:
∘ an inner locking position, wherein the locking element (55) protrudes into the inner receiver volume (71) and is apt to engage into an outer locking throat (11) of the mating fluidic coupling element (3) fitted into the inner receiver volume (71) to resist the removal of the mating fluidic coupling element (3) from the fluidic coupling element (50; 1050), and
∘ an outer unlocking position, wherein the locking element (55) does not resist the removal of the mating fluidic coupling element (3) from the fluidic coupling element (50; 1050); and
- a locking ring (53; 1053), slidably mounted about the body (51; 1051), comprising an inner locking surface (105; 1105) including:
∘ at least one flared surface (107; 1107) diverging along the forward direction (B1), and
∘ a cylindrical overlap surface (109; 1109) which is arranged in continuity with the flared surface (107; 1107) along a rear direction (B2) opposite to the front direction (B1),
the locking ring (53; 1053) being longitudinally movable relative to the body (51; 1051) of the fluidic coupling element (50; 1050) between:
∘ an advanced locking position, wherein the locking ring (53; 1053) abuts forwardly against the body (51; 1051) and the overlap surface (109; 1109) radially surrounds the locking elements (55) and holds same in the inner locking position, and
∘ a retracted unlocking position, wherein the locking ring (53; 1053) does not resist the movement of the locking elements (55) in the respective housing (79) to the outer unlocking position thereof
whereas, the flared surface (107; 1107) is apt to cooperate radially with the locking elements (55), between the advanced locking position and the retracted unlocking position of the locking ring (53; 1053),
the coupling element fluidic (50; 1050) comprising:
- a piston (57) arranged about the body (51; 1051) and about the locking ring (53; 1053) and longitudinally movable relative to the body (51; 1051) and relative to the locking ring (53; 1053),
- a first spring (59) pushing the piston (57) along the forward direction (B1) of the fluidic coupling element (50; 1050) to a position where the piston (57) abuts in the forward direction (B1) against the body (51; 1051).

2. The coupling fluidic element (50; 1050) according to the previous claim wherein:
- the locking elements (55) are elongate segments comprising an inner end (87) with the shape of a portion of a sphere and an outer end (89) with the shape of a portion of a sphere arranged on both sides of a cylindrical median portion (91) which is mating the associated housing (79) and
- each housing (79) extends along a respective direction (R79) radial to the longitudinal axis (X50; X1050).

3. The fluidic coupling element (50; 1050) according to any of the preceding claims comprising, for each locking element 55), a transverse pin (93) rigidly attached to the locking element (55) and which protrudes from an outer surface (85) of the locking element (55), wherein the body (51; 1051) comprises for each housing (79) at least one lateral groove (81) which comes out transversely into the housing (79) and radially on an outer radial surface (77) of the body (51; 1051), the transverse pin (93) being engaged in the lateral groove (81), so that when the locking element (55) is moved from the inner locking position thereof to the outer unlocking position thereof, or vice versa, the transverse pin (93) is moved into the lateral groove (81) and a bottom (83) of the lateral groove (81) forms a stop on the transverse pin (93) which limits the movement of the locking element (55) in the housing (79) toward the inner receiver volume (71) and a longitudinal axis (T93) of the transverse pin (93) is inclined, with respect to a radial plane (P3) perpendicular to the longitudinal axis (X50; X1050) and with respect to a longitudinal plane (P2) extending through the longitudinal axis (X50; X1050).

4. The fluidic coupling element (50; 1050) according to any of the preceding claims comprising at least one second spring (61; 1061) exerting a force on the locking ring (53; 1053) which resists against the movement of the locking ring (53; 1053) to the retracted unlocking position thereof at least when the locking ring (53; 1053) is in the advanced locking position.

5. The fluidic coupling element (50) according to the preceding claim wherein the second spring (61) is interposed between the locking ring (53) and the body (51) of the fluidic coupling element and pushes the locking ring (53) back toward the advanced locking position thereof, the locking ring (53) being, in the uncoupled configuration of the fluidic coupling element (50; 1050), in the advanced locking position.

6. The fluidic coupling element (1050) according to claim 5, wherein:
- a bayonet coupling is formed between the body (1051) of the fluidic coupling element and the locking ring (1053) by cooperation of at least one stud (1151) and a helical groove (1143), the groove (1143) having a notch (1149) forming a first end (1145) of the groove (1143),
- when the locking ring (53; 1053) is in the advanced locking position, the stud (1151) cooperates with the notch (1149) of the groove (1143) and each second spring (1061) resists against the movement of the stud (1151) out of the notch (1149), and
- the locking ring (53; 1053) is in the retracted unlocking position when the stud (1151) cooperates with a second end (1147) of the groove (1143), opposite the first end.

7. A fluidic coupling element (50; 1050) according to any preceding claim wherein the piston (57) comprises a front base (127) which cooperates with a reduced radial play with an outer radial surface of the body (51; 1051), and a rear skirt (125) mounted around the locking ring (53; 1053), the locking ring (53; 1053) being radially covered with reduced radial play by the rear skirt (125) of the piston (57) in all positions of the locking ring (53; 1053) relative to the body (51; 1051) from the retracted unlocking position to the advanced locking position.

8. A fluidic coupling element (50; 1050) according to any of the preceding claims wherein the piston (57) projects from the body (51; 1051) along the forward direction (B1) at least in a configuration uncoupled from the fluidic coupling element (50; 1050).

9. The fluidic coupling element (50; 1050) according to any of the preceding claims wherein:
- the locking ring (53; 1053) comprises an inner chamfer (106) which diverges along the forward direction (B1).
- in the retracted unlocking position of the locking ring (53; 1053), the locking ring (53; 1053) is in rear abutment against the body (51; 1051) and the inner chamfer (106) is longitudinally opposite the locking elements (55), and
- in the retracted unlocking position of the locking ring (53; 1053), the piston (57) forms a radial stop outside the locking elements (55).

10. The fluidic coupling element (50) according to any of the preceding claims, wherein:
- the body (51) of the fluidic coupling element (50) comprises an outer peripheral throat (68) having a distal surface (72).
- the outer peripheral throat (68) is radially uncovered by the locking ring (53) in the advanced locking position and radially covered by the locking ring (53) in the retracted unlocking position, and
- when the distal surface (72) of the outer peripheral throat of the body (51) is in the same radial plane as a rear end surface (108) of the locking ring (53), the overlap surface (109) of the locking ring (53) holds the locking elements (55) in the inner locking position.

11. The fluidic coupling element (50) according to any of the preceding claims, wherein:
- the locking ring (53) has a handling throat (115),
- the body (51) of the fluidic coupling element (50) has a handling throat (70), the handling throat (115) of the locking ring (53) and the handling throat (70) of the body (51) being configured to receive a tool (139) for longitudinally moving the locking ring (53) relative to the body (51), and
- the handling throat (70) provided on the body (51) is uncovered by the locking ring (53) at least when the latter is longitudinally between an intermediate position, arranged between the advanced locking position and the retracted unlocking position, and the advanced locking position.

12. A fluidic coupling (1; 1001) comprising:
- a fluidic coupling element (50; 1050) according to any of the preceding claims, and
- a mating fluidic coupling element (3), comprising a mating body (5) forming the outer locking throat (11).

13. The fluidic coupling (1; 1001) according to the preceding claim comprising a support (25) longitudinally attached to the mating body (5) and which comprises a front face (28) that is arranged about the mating fluid coupling element (3), the fluid coupling being configured such that, in a coupled configuration of the fluidic coupling (1),
∘ the locking ring (53) is in the advanced locking position,
∘ the locking elements (55) are engaged in the outer locking throat (11) in contact with an inclined distal surface (17) of said throat,
∘ a front face (129) of the piston (57) is longitudinally abutted against the front face (28) of the support (25) and
∘ the piston (57) is offset along the rearward direction (B2) with respect to the position thereof in front abutment against the body (51; 1051).

14. The fluidic coupling (1; 1001) according to any of claims 12 to 13, wherein ratio between:
- an angle (α) defined between the inclined distal surface (17) of the outer locking throat (11) and a longitudinal axis (X3) of the mating coupling element (3),
- an angle (δ) defined between the flared surface (107; 1107) and the longitudinal axis (X50; X1050) of the fluidic coupling element (50; 1050),
is comprised between 4 and 12.

15. The fluidic coupling (1; 1001) according to any of claims 12 to 14, wherein:
- the mating body (5) comprises an outer radial surface (9), and
- the body (51; 1051) of the fluidic coupling element (50; 1050) has a stepped inner radial surface (73) delimiting the inner receiver volume (71).
- the stepped outer radial surface (9) and the stepped inner radial surface (73) are configured to cooperate by mating shapes during the coupling of the fluidic coupling (1).
